# EUROPEAN PATENT SPECIFICATION

(11) **EP 3 425 223 B1**
(45) Date of publication and mention of the grant of the patent: **04.11.2020**
(21) Application number: 17760073.1
(22) Date of filing: 01.03.2017
(51) Int. Cl.: F16C 33/78, F16C 19/06, F16J 15/3204, F16C 19/16

(54) **SEALED BEARING AND BALL BEARING**
LAGER MIT DICHTUNG UND KUGELLAGER
ROULEMENT COMPORTANT UN JOINT D'ÉTANCHÉITÉ, ET ROULEMENT À BILLES

(30) Priority: 01.03.2016 JP 2016038996; 01.03.2016 JP 2016039108; 01.03.2016 JP 2016039019; 08.03.2016 JP 2016044372
(43) Date of publication of application: 09.01.2019
(73) Proprietor: NTN Corporation, Osaka-shi, Osaka 550-0003 (JP)
(72) Inventor: INAMASU, Kazunori, Iwata-shi Shizuoka 438-8510 (JP); SASAKI, Katsuaki, Iwata-shi Shizuoka 438-8510 (JP); WAKUDA, Takahiro, Iwata-shi Shizuoka 438-8510 (JP); SUGAI, Tomohiro, Kuwana-shi Mie 511-0867 (JP); NISHIKAWA, Kentaro, Iwata-shi Shizuoka 438-8510 (JP); UTSUNOMIYA, Satoshi, Iwata-shi Shizuoka 438-8510 (JP); MATSUMOTO, Yuu, Iwata-shi Shizuoka 438-8510 (JP)
(74) Representative: Grünecker Patent- und Rechtsanwälte PartG mbB
(86) International application number: PCT/JP2017/008103
(87) International publication number: WO 2017/150609

(56) References cited:
- EP-A1- 3 269 989
- DE-A1- 3 607 535
- FR-A1- 2 636 691
- FR-A1- 2 636 691
- GB-A- 2 061 415
- GB-A- 2 112 879
- JP-A- 2004 068 889
- JP-A- 2006 083 922
- JP-A- 2007 051 761
- JP-A- 2007 146 869
- JP-A- 2013 210 003
- JP-U- S5 463 843
- JP-U- S6 077 818
- US-A- 5 553 870
- Schmierverfahren Grundlagen ET AL: "Schmierung von W?lzlagern", , 1 March 2013 (2013-03-01), XP055356464, Retrieved from the Internet: URL:http://www.schaeffler.com/remotemedien /media/_shared_media/08_media_library/01_p ublications/schaeffler_2/tpi/downloads_8/t pi_176_de_de.pdf [retrieved on 2017-03-20]

## Description

### TECHNICAL FIELD

The present invention relates to a rolling bearing and a sealed bearing including seal members.

### BACKGROUND ART

Foreign matter/objects such as wear dust generated from gears are present in the transmissions of vehicles, such as automobiles and machines for construction. Therefore, rolling bearings include seal members preventing foreign matter/objects from entering the bearing interior space such that the rolling bearings do not break at an early stage.

As a rolling bearing suitable for supporting a rotary member of the transmission or differential of a vehicle, such as an automobile or a machine for construction, the below-identified Patent document 1 discloses a conventional ball bearing of which the axial load-receiving ability is superior to that of a normal deep groove ball bearing.

The ball bearing of Patent document 1 includes an inner race having a raceway groove; an outer race having a raceway groove; and a plurality of balls disposed between the raceway groove of the inner race and the raceway groove of the outer race. The inner race has, on both sides of its raceway groove, a non-load-receiving shoulder, and a load-receiving shoulder configured to receive axial loads, and higher in height than the non-load-receiving shoulder. Since the load-receiving shoulder is higher in height than the non-load-receiving shoulder, it is possible to make large the contact angle at which the balls come in contact with the raceway groove of the inner race on the load-receiving side of the bearing. Therefore, the torque of the ball bearing while operating is low as with a deep groove ball bearing, and the axial load-receiving ability of the ball bearing is superior to that of a deep groove ball bearing.

If the ball bearing of Patent document 1 is used in the transmission of a vehicle, since foreign matter/objects, such as wear dust generated from gears, are present in the housing of the transmission, seal members are attached to the ball bearing, and prevent foreign matter/objects from entering the bearing interior space such that the ball bearing does not break at an early stage.

Seal members normally include seal lips made of e.g., rubber. Seal sliding surfaces with which the seal lips can come into sliding contact are formed on bearing parts circumferentially rotatable relative to the seal members, such as bearing races or slingers. Since the seal sliding surfaces are in sliding contact with the respective seal lips over its entire circumference, the drag resistance (seal torque) of the seal lips is high, so that the torque of the bearing increases. Also, due to the friction generated by such sliding contact, the temperature of the rolling bearing rises. As this temperature rises, the seal lips more strongly stick to the seal sliding surfaces due to the difference between the pressure in the bearing interior space and the pressure in the bearing exterior of the bearing, so that the friction between the seal lips and the seal sliding surfaces further increases.

Axial lips are normally used as the seal lips of such seal members. An axial lip means a seal lip fitted, with axial interference, on a seal sliding surface extending along the radial direction or extending at an acute angle of less than 45 degrees relative to the radial direction, thereby generating a sealing effect between the seal lip and the seal sliding surface.

In order to reduce the seal torque of such a seal member kept in contact with the seal sliding surface, the below-identified Patent document 2 proposes to subject the seal sliding surface to shot peening such that the seal sliding surface comprises an uneven seal sliding surface which has minute protrusions and recesses, and of which the maximum roughness Ry is 2.5 µm or less, so that an oil film is easily formed between the seal lip and the seal sliding surface due to the lubricating oil remaining in the minute recesses of the uneven seal sliding surface.

### PRIOR ART DOCUMENTS

### PATENT DOCUMENTS

Patent document 1: Japanese Unexamined Patent Application Publication No. 2000-145795
Patent document 2: Japanese Unexamined Patent Application Publication No. 2007-107588
Patent document 3: FR 2 636 691 A1 discloses a sealed bearing according to the preamble of independent claim 1.

### SUMMARY OF THE INVENTION

### PROBLEMS TO BE SOLVED BY THE INVENTION

By subjecting the seal sliding surface to shot peening as proposed in Patent document 2, the sliding area of the seal sliding surface coming into sliding contact with the seal lip is decreased, thereby reducing the seal torque. However, since it is difficult to markedly decrease this sliding area by shot peening, it is difficult to markedly reduce the seal torque.

Since the temperature of lubricating oil is relatively low right after the bearing starts to operate, the viscosity of lubricating oil is relatively high, and thus an oil film can be easily formed. As the temperature of lubrication oil rises due to the continuous operation of the bearing, the viscosity of lubricating oil decreases, so that the oil film might not be a continuous one. The higher the operation speed the bearing, the larger the peripheral speed of the seal sliding surface relative to the seal lip. As a result thereof, a large amount of heat is generated due to the friction between the seal lip and the seal sliding surface, so that the temperature of lubricating oil tend to rise, and the seal lip tends to become worn. Therefore, due to such lubricating condition, there is a limit to the highest speed, i.e., the maximum rotational speed of the sealed bearing. Specifically, a sealed bearing used to support a rotary part of a drive member of an electric vehicle (EV) is strongly required to rotate at a high speed, but even if the sliding surface is subjected to shot peening so as to reduce the torque of the sealed bearing, it is impossible to meet this requirement.

If a non-contact seal member is used, the seal torque is zero (nil). However, it is difficult to accurately manage errors relating the sizes of the gaps defined between the seal member and bearing parts and capable of preventing the entry of foreign objects larger in particle diameter than a predetermined value.

It is a object of the present invention to reduce the torque of a ball bearing while operating which has an axial load-receiving ability superior to that of a normal deep groove ball bearing, and to increase the operation speed of the ball bearing, while preventing the entry of foreign objects larger in particle diameter than a predetermined value.

### MEANS FOR SOLVING THE PROBLEMS

In order to achieve the above object, the present invention provides a ball bearing comprising the features of independent claim 1.

According to the present invention, since the load-receiving shoulder is higher in height than the non-load-receiving shoulder, the sealed bearing is a ball bearing of which the axial load-receiving ability is superior to that of a normal deep groove ball bearing. The protrusions define oil passages between each seal sliding surface and the seal lip by which the bearing interior space is sealed, and as the bearing rotates, lubricating oil within the oil passages is dragged into the space between each seal sliding surface and the seal lip due to wedge effect, so that an oil film is easily formed therebetween and thus fluid lubrication condition is generated in which the seal lip is completely separated from each seal sliding surface by the oil film while not kept in direct contact with the seal sliding surface. Since the bearing can operate under fluid lubrication condition, the seal torque is substantially zero (nil); the seal lips do not substantially become worn; a large amount of heat is not generated by the sliding between each seal lip and the seal sliding surface. Therefore, it is possible to increase the allowable/maximum peripheral speed of each seal sliding surface relative to the axial seal lip, and to make the sealed bearing operate at a high speed which conventional sealed bearings were not able to achieve. Also, it is possible to prevent the adsorption of the seal lips. Also, the particle diameter of foreign objects capable of passing through the oil passages can be set on the basis of the heights of the protrusions. Therefore, it is possible to freely predetermine the particle diameter of foreign objects which need to be prevented from entering the bearing interior space, and to prevent foreign objects having this predetermined particle diameter or more from entering the bearing interior space through the oil passages. Thus, according to the present invention, it is possible to reduce the torque of the ball bearing while operating which has an axial load-receiving ability superior to that of a normal deep groove ball bearing, and to increase the operation speed of the ball bearing, while preventing the entry of foreign objects having a predetermined particle diameter or more.

### BRIEF DESCRIPTION OF THE DRAWINGS

Fig. 1 is a sectional view of a sealed bearing according to a first embodiment of the present invention.
Fig. 2 illustrates an enlarged view of a seal lip of a seal member on the right side of Fig. 1.
Fig. 3 is an enlarged sectional view taken along line III-III of Fig. 2.
Fig. 4 is a partial front view of a seal lip of one of seal members shown in Fig. 1, when seen in the axial direction.
Fig. 5 is a graph illustrating the particle diameter distribution and the numbers of foreign objects present in lubricating oil in vehicle transmissions (AT/MT).
Fig. 6 is a circle graph illustrating rates of the particle diameter distribution illustrated in Fig. 5.
Fig. 7 is a graph illustrating the particle diameter distribution and the numbers of foreign objects present in lubricating oil in transmissions (CVT) of vehicles.
Fig. 8 is a circle graph illustrating rates of the particle diameter distribution illustrated in Fig. 7.
Fig. 9 is a graph illustrating an experimental result obtained by measuring the torque of bearings including protrusions having different rounded shape dimensions.
Fig. 10 is a lubrication region view illustrating fluid lubrication mode in the first embodiment.
Fig. 11 is a graph illustrating the relationship between the intervals between the protrusions and the theoretical oil film thickness, and between the intervals between the protrusions and the torque of the bearing, in the first embodiment.
Fig. 12 is a graph illustrating the relationship between the rounded shape dimensions of the protrusions and the theoretical oil film thickness in the first embodiment.
Fig. 13 is a partial perspective view of a seal lip according to a second embodiment of the present invention.
Fig. 14A is a schematic diagram illustrating how the seal lip of Fig. 13 is formed by vulcanization.
Fig. 14B a schematic diagram illustrating the seal lip formed by the vulcanization step of Fig. 14A.
Fig. 15A a schematic diagram illustrating how an imaginary seal lip is formed by vulcanization.
Fig. 15B a schematic diagram illustrating the imaginary seal lip formed by the vulcanization step of Fig. 15A.
Fig. 16 is a sectional view of a sealed bearing according to a third embodiment of the present invention.
Fig. 17 illustrates an enlarged view of seal lips of a seal member on the right side of Fig. 16.
Fig. 18 illustrates an enlarged view of the seal lips of Fig. 17, showing how elastically deformed while fitted by interference.
Fig. 19 is an enlarged sectional view taken along line XIX-XIX of Fig. 18.
Fig. 20 is a partial front view of one of the seal lips according to the third embodiment when seen in the axial direction.
Fig. 21 is a sectional view of a sealed bearing according to a fourth embodiment of the present invention.
Fig. 22 is a sectional view of a sealed bearing according to a fifth embodiment of the present invention.
Fig. 23 is a view illustrating the relationship between the intervals between the protrusions and the theoretical oil film thickness in the fifth embodiment.
Fig. 24 is a sectional view of the transmission of a vehicle in which sealed bearings according to the present invention are used.

### PREFERRED ARRANGEMENTS OF THE INVENTION

Preferred arrangements (which are first to fourth preferred arrangements of the present invention) are described below.

In the first preferred arrangement, the load-receiving shoulder is different in outer diameter from the non-load-receiving shoulder; the seal sliding surface on the load-receiving shoulder is different in diameter from the seal sliding surface on the non-load-receiving shoulder; and the protrusions of the seal member on the load-receiving side of the bearing are different in number from the protrusions of the seal member on the non-load-receiving side of the bearing. Since, due to the difference between the outer diameters of the load-receiving shoulder and the non-load-receiving shoulder, it is difficult to equalize the diameter of the seal sliding surface on the load-receiving shoulder and the diameter of the seal sliding surface on the non-load-receiving shoulder, it is preferable to make the diameters of these seal sliding surfaces differ from each other. If the diameters of these seal sliding surfaces are different from each other, since the seal sliding surface on the load-receiving shoulder is larger in diameter than the seal sliding surface on the non-load-receiving shoulder, when the inner and outer races of the bearing rotate relative to each other, the seal sliding surface on the load-receiving shoulder when sliding relative to the seal lip on the load-receiving side of the bearing is higher in peripheral speed than the seal sliding surface on the non-load-receiving shoulder when sliding relative to the seal lip on the non-load-receiving side of the bearing. Also, when the inner and outer races rotate relative to each other, the above-described difference between the outer diameters of the shoulders generates such a pumping effect as allowing lubricating oil to flow in the bearing interior space from the side of the non-load-receiving shoulder to the side of the load-receiving shoulder. Due to the above-described difference in peripheral speed and pumping effect, the lubricating condition between the seal sliding surface and the seal lip on the load-receiving side of the bearing is different from the lubricating condition between the seal sliding surface and the seal lip on the non-load-receiving side of the bearing. According to the first preferred arrangement, since the protrusions of the seal member on the load-receiving side of the bearing are different in number from the protrusions of the seal member on the non-load-receiving side of the bearing, by setting, in an optimal manner, the number of the protrusions passing through a predetermined position between the seal member and the seal sliding surface on the load-receiving side of the bearing, and the number of the protrusions passing through a predetermined position between the seal member and the seal sliding surface on the non-load-receiving side of the bearing when the inner and outer races rotate once relative to each other, it is possible to form, on both sides of the bearing, oil films having equal or substantially equal, and optimum thicknesses.

In the second preferred arrangement, the seal sliding surface on the load-receiving shoulder is different in diameter from the seal sliding surface on the non-load-receiving shoulder, and the protrusions of the seal member on the load-receiving side of the bearing are different in circumferential pitch angle from the protrusions of the seal member on the non-load-receiving side of the bearing. Since the circumferential pitch angles thereof are different from each other in this way, by setting, in an optimal manner, the number of the protrusions passing through a predetermined position between the seal member and the seal sliding surface on the load-receiving side of the bearing, and the number of the protrusions passing through a predetermined position between the seal member and the seal sliding surface on the non-load-receiving side of the bearing when the inner and outer races rotate once relative to each other, it is possible to form, on both sides of the bearing, oil films having equal or substantially equal, and optimum thicknesses.

The second preferred arrangement may be combined with the first preferred arrangement.

In the third preferred arrangement, the protrusions are circumferentially arranged at equal intervals over the entire circumference of each seal lip. Therefore, it is possible to easily form an oil film in a uniform manner over the entire circumference of each seal sliding surface.

The third preferred arrangement may be combined with the first or second preferred arrangement.

In the fourth preferred arrangement, wedge-shaped gaps are defined between the seal sliding surface and each protrusion so as to be each larger on the side of the oil passage than on the side of the protrusion. Also, as the bearing rotates, due to the wedge effect generated by the gaps between the protrusions and the seal sliding surface, lubricating oil within the oil passages is easily dragged toward the protrusions, and an oil film is easily formed between the protrusions and the seal sliding surface. Also, due to the shape of the protrusions corresponding to the wedge shape of the gaps, it is possible to decrease the area of each protrusion capable of coming into sliding contact with the seal sliding surface, and affecting the seal torque.

In the fourth preferred arrangement, it is preferable that each protrusion extends in the direction orthogonal to the circumferential direction, which is the direction in which the seal sliding surface slides relative to the protrusion, and has a rounded shape rounded such that the protrusion gradually approaches the seal sliding surface from both ends thereof toward the center thereof with respect to the circumferential width of the protrusion, and such that the area of the protrusion capable of coming into sliding contact with the seal sliding surface decreases. Since each protrusion has such a rounded shape, the area of the protrusion capable of coming into sliding contact with the seal sliding surface exists on a linear area. Since, due to such a rounded shape, the wedge angle of each wedge-shaped gap gradually narrows toward the center of the protrusion with respect to its circumferential width, the wedge effect can be generated in an effective manner, so that the oil pressure can be increased at the linear area, and fluid lubrication condition can be easily generated between the protrusions and the seal sliding surface. Even if the protrusions are rubbed against the seal sliding surface when the seal member is attached to the bearing, due to such a rounded shape, the protrusions will never be circumferentially bent from their distal ends, so that the seal torque will be kept low when the seal member is attached to the bearing.

The fourth preferred arrangement may be combined with one or more of the first, second and third preferred arrangements.

### EMBODIMENTS

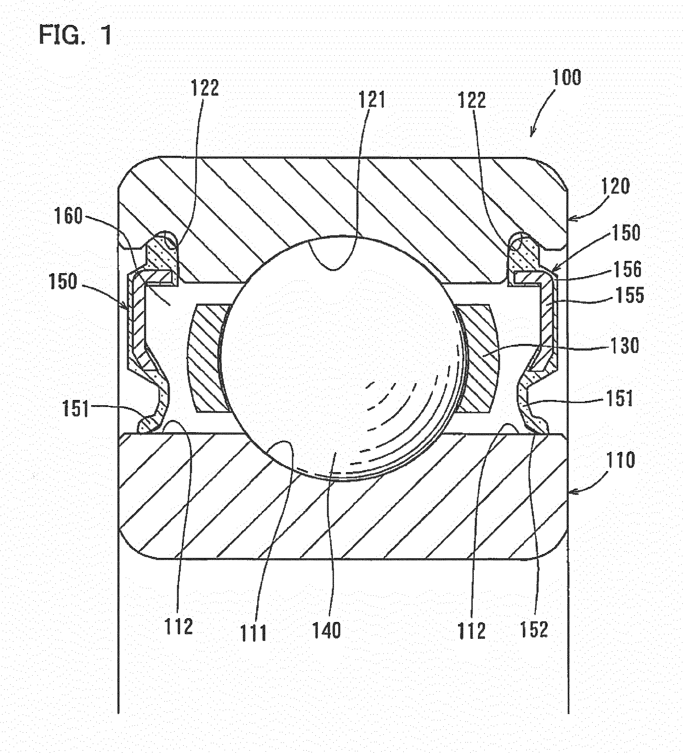

Figs. 1 to 10 show a sealed bearing 100 not part of the invention.

As shown in Fig. 1, the sealed bearing 100 includes an inner race 110; an outer race 120; a retainer 130; a plurality of rolling elements 140 retained by the retainer 130; and two seal members 150 sealing the respective ends of a bearing interior space 160 defined between the inner race 110 and the outer race 120. As used herein, "axial", "axially", and "axial direction" refer to the direction along the center axis of the sealed bearing 100; "radial", "radially" and "radial direction" refer to a direction orthogonal to the center axis of the sealed bearing 100; ; and "circumferential", "circumferentially" and "circumferential direction" refer to the direction about the center axis of the sealed bearing 100.

The bearing interior space 160 is an annular space defined by the inner race 110 and the outer race 120. The rolling elements 140 roll in the bearing interior space 160 while disposed between the inner race 110 and the outer race 120. Lubricating oil comprising grease or in an oil bath is supplied into the bearing interior space 160.

The inner race 100 is attached to a rotary shaft (not shown) comprising e.g., a rotary member of a vehicle transmission or differential, and rotates together with the rotary shaft. The outer race 120 is attached to a member configured to receive loads from the rotary shaft, such as a housing or a gear.

The sealed bearing 100 comprises a deep groove ball bearing, in which balls are used as the rolling elements 140. The inner race 110 and the outer race 120 have, respectively, raceway grooves 111 and 121 each extending, in cross section (shown in Fig. 1), about one- third (1/3) of the circumference of the rolling element 140, and continuously extending over the entire circumference of the corresponding one of the inner and outer races.

Seal grooves 122 for retaining the seal members 150 are formed in the inner periphery of the outer race 120 at its respective ends. The seal members 150 are attached to the outer race 120 by press-fitting the outer peripheral edges of the seal members 150 into the respective seal grooves 122.

The bearing interior space 160 and the bearing exterior of the bearing are separated from each other by the seal members 150. In the bearing exterior, there are powder-like foreign objects which differ according to the device in which the bearing 100 is mounted, such as wear dust generated from clutches or gears, or crushed minute stones. Though such powder-like foreign objects can reach the vicinities of the seal members 150 by the flow of lubricating oil or atmospheric air, the seal members 150 prevent such foreign objects from entering the bearing interior space 160 from the bearing exterior.

Each seal member 150 includes a seal lip 151 extending/protruding like a tongue on its inner peripheral side. Seal sliding surfaces 112 are formed on the outer periphery of the inner race 110, and circumferentially slide relative to the seal lips 151 of the respective seal members 150. The seal sliding surfaces 112 comprise cylindrical surfaces extending over the entire circumference of the inner race. The seal lips 151 comprise radial lips. A radial seal lip means a seal lip fitted, with radial interference, on a seal sliding surface extending along the axial direction or extending at an acute angle of 45 degrees or less relative to the axial direction, thereby generating a sealing effect between the seal lip and the seal sliding surface.

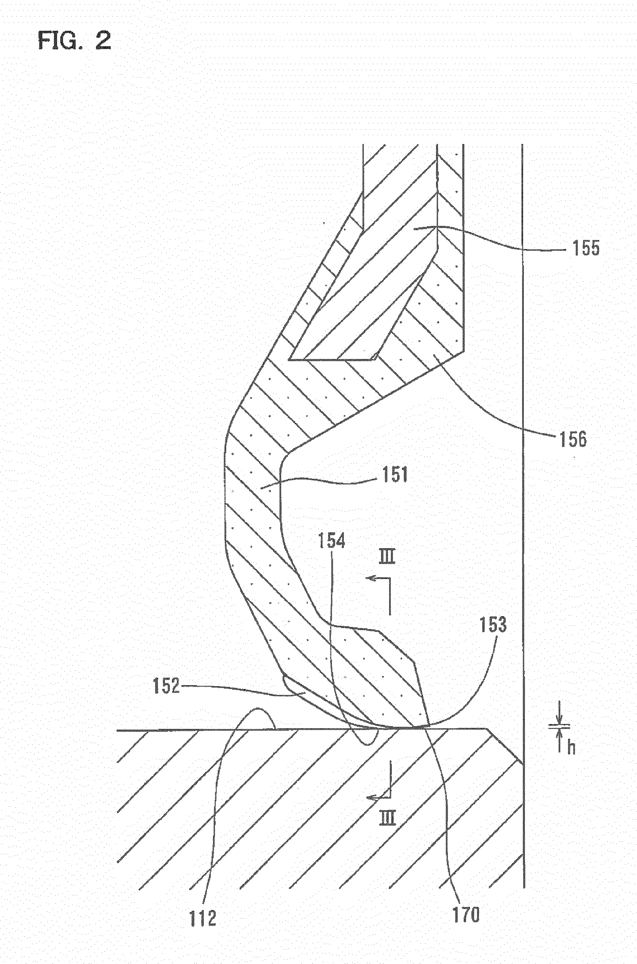

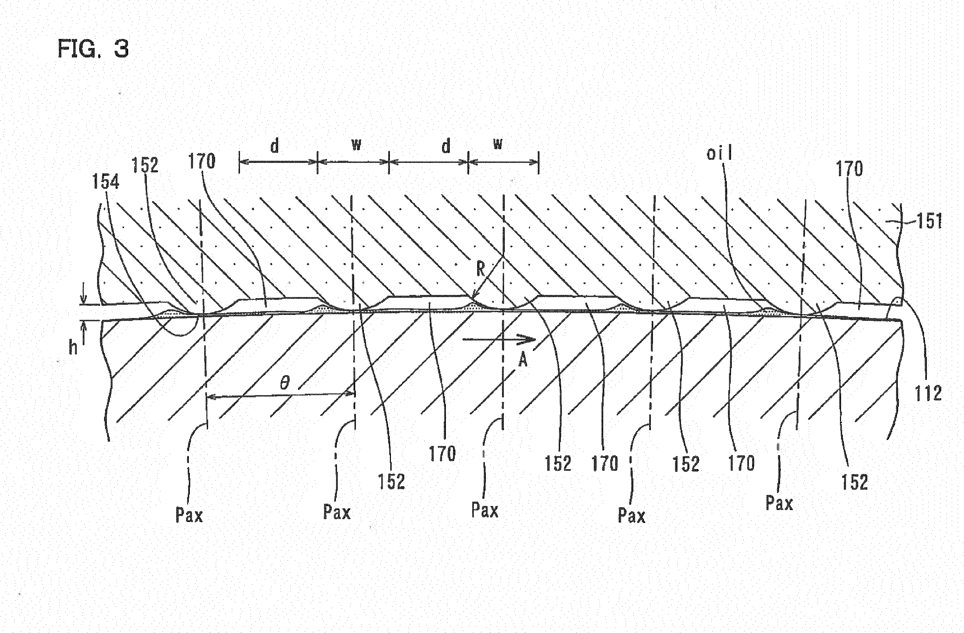

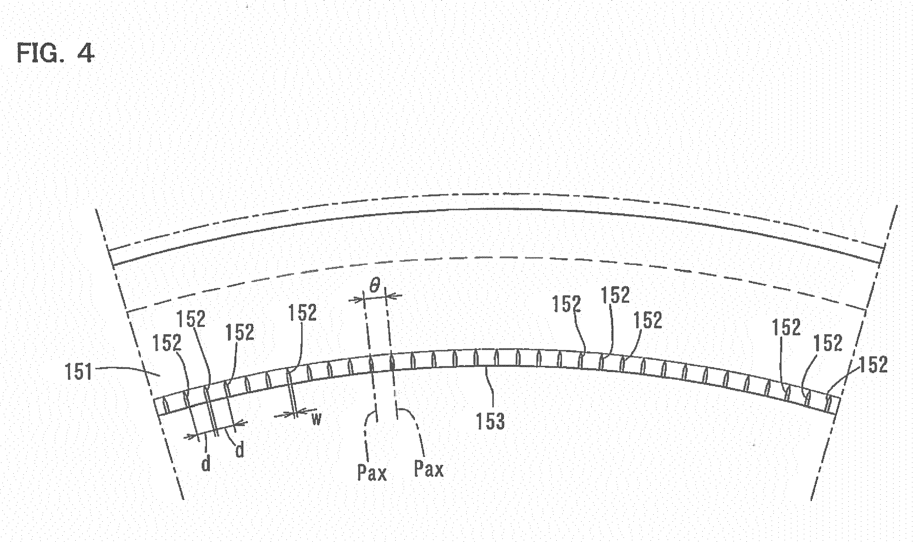

Fig. 2 is an enlarged view illustrating the seal lip 151 of one of the seal members 150 illustrated in Fig. 1, and the vicinity of this seal lip 151. Fig. 3 is a sectional view taken along line III-III of Fig. 2. The seal lip 151 is designed such that gaps (including oil passages 170) defined between the seal sliding surface 112 and the seal lip 151 in directions orthogonal to the seal sliding surface 112 are the narrowest at the section of Fig. 3. Fig. 4 illustrates, with the seal member 150 not attached to the bearing yet, i.e., in its natural state, the external appearance of the seal lip 151 when axially seen from the bearing interior space. The "natural state" of the seal member means the state in which no external force is applied to the seal member, i.e., the seal member is not attached to the bearing yet, and thus not deformed by an external force (this state is hereinafter simply referred to as the "natural state").

As illustrated in Figs. 2 to 4, the seal lip 151 includes protrusions 152 extending/protruding in the directions orthogonal to the seal sliding surface 112, i.e., in the normal directions orthogonal to the tangential directions of the seal sliding surface 112. Since the seal sliding surface 112 comprises a cylindrical surface having a center at the center axis of the bearing, the above normal directions correspond to the radial directions.

The seal lip 151 is fitted on the seal sliding surface 112 with radial interference. Due to this radial interference, the seal lip 151 is radially pressed against the seal sliding surface 112, and thus elastically deformed or bent outwardly, thereby generating a tightening force of the seal lip 151. Mounting errors and manufacturing errors of the seal member 150 are absorbed by the elastic bending of the seal lip 151.

As illustrated in Fig. 4, the seal lip 151 has a distal edge 153 defining the inner diameter of the seal lip 151 with the seal member 150 in the natural state.

As illustrated in Figs. 2 to 4, the protrusions 152 of the seal lip 151 extend in directions orthogonal to the circumferential direction, and reach the distal edge 153 of the seal lip 151. The protrusions 152 are formed substantially over the entire area of the portion of the seal lip 151 fitted on the seal sliding surface 112 with radial interference.

The protrusions 152 of the seal lip 151 are circumferentially arranged at regular intervals "d". According to the external appearance of the seal lip 151 when axially seen from the bearing interior space side, the protrusions 152 are circumferentially arranged at regular pitch angles θ corresponding to the intervals "d", and extend along radial lines, i.e., lines that pass through the center axis of the seal member 150, which is not shown and coincides with the center axis of the bearing).

Due to the fact that the radially extending protrusions 152 are in the vicinity of the distal edge 153 of the seal lip 151, and by properly setting the intervals "d" between the respective circumferentially adjacent pairs of protrusions 152, and the circumferential widths "w" of the respective protrusions 152, only the protrusions 152 of the seal lip 151 (and no other portions of the seal lip 151) can come into sliding contact with the seal sliding surface 112 and thus the oil passages 170 are always defined between the respective circumferentially adjacent pairs of protrusions 152. Namely, the intervals "d" and the circumferential widths "w" are set such that when the seal member 150 is attached to the bearing, the protrusions 152 of the seal lip 151 come into contact with the seal sliding surface 112 while keeping their protruding state/shapes against the tightening force of the seal lip 151, and thus the oil passages 170, which communicate with the bearing interior space 160 and the bearing exterior, are defined by the respective circumferentially adjacent pairs of protrusions 152. Lubricating oil flows from the bearing exterior into the bearing interior space 160 through the oil passages 170. Lubricating oil which has flowed into the bearing interior space 160 or the base oil of grease sealed in the bearing interior space flows to the bearing exterior through the oil passages 170.

The particle diameters of foreign objects capable of passing through the oil passages 170 can be determined based on the heights "h" of the protrusions 152 in the directions orthogonal to the seal sliding surface 112. Thus, in the first embodiment, it is possible to freely predetermine the particle diameters of foreign objects which need to be prevented from entering the bearing interior space 160 through the oil passages 170, and thus to prevent entry of such foreign objects into the bearing interior space 160.

Wear dust, a kind of foreign object, having particle diameters of more than 50 µm can cause the bearing to break at an early stage. It was discovered that by setting the heights "h" of the protrusions 152 at 0.07 mm or less, it is possible to prevent such wear dust from passing through the oil passages 170. The heights "h" are preferably set at 0.04 mm or less, but in the embodiment, the heights h are set at 0.07 mm or less in view of tolerance. On the other hand, by setting the heights "h" of the protrusions 152 at 0.07 mm, oil can pass through the oil passages 170 in a smooth manner.

Wedge-shaped gaps are defined between the seal sliding surface 112 and each protrusion 152 of the seal lip 151 so as to be each larger on the side of the corresponding oil passage 170 than on the side of the protrusion 152. The surfaces 154 of the protrusions 152 are curved to define the wedge-shaped gaps. As illustrated in Fig. 3, when, due to the rotation of the inner race 100, the seal sliding surface 112 rotates relative to the seal lip 151 in the circumferential direction (for example, in the direction indicated by the arrow "A" in Fig. 3), lubricating oil (indicated by dotted pattern in Fig. 3) within each oil passage 170 is dragged into the space between the seal sliding surface 112 and the corresponding protrusion 152, so that an oil film is easily formed therebetween. Therefore, the friction coefficient (µ) between the seal lip 151 and the seal sliding surface 112 deceases, and thus the seal torque decreases. Also, the oil passages 170 enable smooth oil flow between the bearing interior space 160 and the bearing exterior. Therefore, the temperature of the sealed bearing 100 does not rise excessively, thus preventing sticking of the seal lip 151.

As illustrated in Fig. 1, each seal member 150 is constituted by a metal core 155 comprising a metal plate formed by pressing, and a vulcanized rubber part 156 formed by vulcanizing a rubber material, and attached to at least the radially inner portion of the metal core 155. The metal core 155 is an annular member, i.e., a member extending the entire circumference of the seal member 150. The seal lip 151 is a tongue-shaped portion of the vulcanized rubber part 156. The seal member 150 comprises an integral member formed, for example, by placing the metal core 155 into a mold, and forming the vulcanized rubber part 156 by vulcanization such that the metal core 155 and the vulcanized rubber part 156 become integral with each other. The vulcanized rubber part 156 may be attached to the entire area of the metal core 155, or attached only to the radially inner portion of the metal core 155.

Thus, it is possible to form the protrusions 152 when forming the seal lip 151 by vulcanization. Also, the seal sliding surface 112 can be formed easily because it can be directly formed on one of the bearing races as, e.g., a cylindrical or groove-shaped surface having an identical sectional shape over the entire circumference.

The seal lip 151 is configured such that the protrusions 152, which are solid elements, are kept free from substantial deformation (i.e., deformation that adversely affects the lubrication performance between the protrusions 152 and the seal sliding surface 112) due to the tightening force of the seal lip 151 or the oil pressure of lubricating oil. Therefore, the shapes of the protrusions 152 while the bearing is operating are substantially identical to their shapes when the protrusions 152 are formed by vulcanization by transferring the shape of the mold.

The sealed bearing 100 is used to support a rotary member of the transmission of a vehicle. Generally, oil is supplied to a sealed bearing disposed in the transmission by oil splashing, from an oil bath, or by nozzle jet. Therefore, lubricating oil is present in the vicinity of the seal lips of the seal members fixed to one of the inner and outer races of such a sealed bearing. The lubricating oil supplied to such a sealed bearing is also used to lubricate other parts of the transmission which need to be lubricated, such as gears. This lubricating oil is circulated by an oil pump, and filtered by an oil filter disposed in the lubricating oil circulation path.

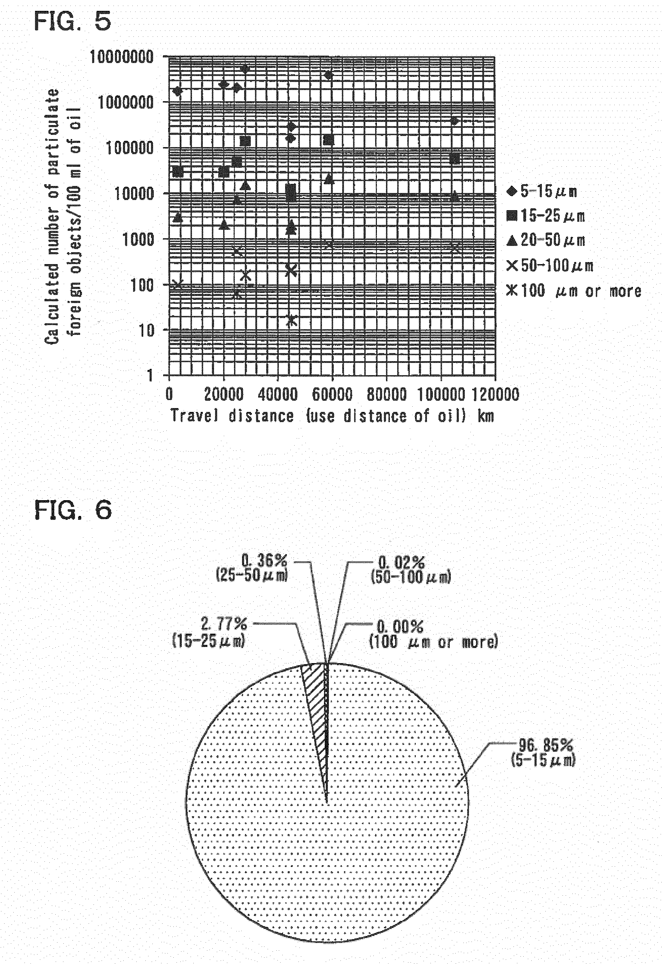

The inventors of the present application recovered lubricating oil from eight automatic transmission (AT) or manual transmission (MT) vehicles which had been actually used on the road, and of which the travel distances (mileages) were different from each other; and investigated the numbers, the particle diameter distributions, and the materials, of foreign objects present in the thus recovered (used) lubricating oil samples. The graph of Fig. 5 illustrates, as a result of this investigation, the numbers, and the particle diameter distributions of such foreign objects. In the graph of Fig. 5, the horizontal axis indicates the travel distances of the eight vehicles, whereas the vertical axis indicates, on the logarithmic scale, the numbers of (particulate) foreign objects per 100 ml of lubricating oil in respective particle diameter ranges of 5 µm or more and less than 15 pm, 15 µm or more and less than 25 pm, 20 µm or more and less than 50 µm, 50 µm or more and less than 100 µm, and 100 µm or more. Foreign ojbjects having particle diameters smaller than 5 µm were not counted. The numbers of such foreign objects were counted by a particulate foreign object measuring method using a measuring device manufactured by Hiac Royco, model No. 8000A. The circle graph of Fig. 6 illustrates, in percentage terms, the respective particle diameter ranges illustrated in Fig. 5.

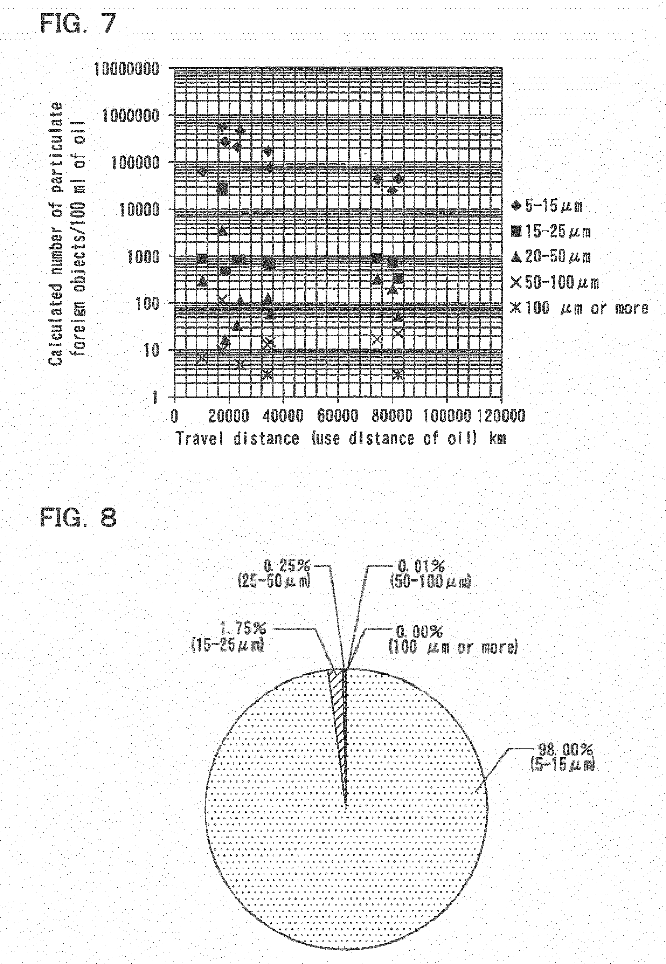

Fig. 7 is a graph similar to the graph of Fig.5 and illustrating the numbers of foreign objects in the respective particle diameter ranges for lubricating oil samples recovered from ten vehicles with a continuously variable transmission (CVT). The circle graph of Fig. 8 illustrates, in percentage terms, the respective particle diameter ranges illustrated in Fig. 7. While the manufacturers, the models, and the travel distances of the above eight and ten vehicles, from which lubricating oil was recovered, are not the same, as is apparent from the comparison of Figs. 5 and 6 with Figs. 7 and 8, foreign objects present in the lubricating oil recovered from the AT/MT vehicles, in which many gears are used, tend to be larger in both particle diameter and number than foreign objects present in the lubricating oil recovered from the CVT vehicles. Irrespective of the type of transmission, the foreign objects having particle diameters of 50 µm or less accounted for 99 % or more of the total number of the foreign objects present in the recovered lubricating oil. Irrespective of the travel distance, the number of foreign objects having particle diameters of more than 50 µm was less than 1,000 in the case of any of the AT/MT vehicles, and was less than 200 in the case of any of the CVT vehicles. This indicates that, due to the recent improvement of oil filters, foreign objects present in the lubricating oil used in today's vehicles are smaller in size (because foreign objects having large particle diameters are removed by oil filters).

The inventors of the present application also investigated, if foreign objects are present in the lubricating oil of the bearing interior space, the relationship between the particle diameters of such foreign objects and the life of the bearing. The investigation revealed that the larger the number of foreign objects having relatively large particle diameters, the shorter the life of the bearing tends to be, but that, if the number of foreign objects having particle diameters of 50 µm or more is sufficiently small, as in the environment in today's transmissions, even if such foreign objects enter a bearing having no seals, the life ratio of the bearing (ratio of its actual life to calculated life) is sufficient for actual use in an automotive transmission (for example, about 7 to 10).

The above results show that, if lubricating oil filtered by an oil fitter is supplied to a sealed bearing used to support a rotary part of a drive member (e.g., transmission or differential) of a vehicle, and if the seal members of the sealed bearing can prevent foreign objects having particle diameters of more than 50 µm from entering the bearing interior space, the life of the bearing will not be affected even if the seal members allow foreign objects having particle diameters of 50 µm or less to enter the bearing interior space. By using such seal members, sufficient lubricating oil can flow between the seal lips and the respective seal sliding surfaces, so that, in combination with the above-described wedge effect, fluid lubrication condition can be generated between the seal lips and the seal sliding surfaces.

In view of the above, as illustrated in Figs. 2 and 3, the heights "h" of the protrusions 152 are set at 0.07 mm. The height "h" of each protrusion 152 is the value measured at the highest position of the area of the protrusion 152 capable of coming into sliding contact with the seal sliding surface 112. The interference between each protrusion 152 and the seal sliding surface 112 is the highest at the above highest position. Since the deformation of the protrusions 151 while the bearing is operating is ignorable, the gaps (including the oil passages 170) defined between the seal lip 151 and the seal sliding surface 112 in the direction perpendicular to the seal sliding surface 112 are, at their narrowest portions, equal to the heights "h" of the protrusions 152, and do not substantially exceed 0. 07 mm. Therefore, even if external lubricating oil contains foreign objects having particle diameters of more than 50 µm, such foreign objects will substantially not be able to pass through the oil passages 170.

Each protrusion 152 has a rounded shape rounded over the entire circumference of the protrusion 152 such that the protrusion 152 gradually approaches the seal sliding surface 112 from both ends thereof toward the center thereof with respect to the circumferential width "w". Therefore, the area of each protrusion 152 capable of coming into sliding contact with the seal sliding surface 112 exists along a linear area on an imaginary axial plane Pax passing through the center of the protrusion 152 with respect to the circumferential width "w". The curvature center of the rounded shape of each protrusion 152 exists on the imaginary axial plane Pax.

When the seal sliding surface 112 rotates relative to the seal lip 151 in the direction of the arrow "A" shown in Fig. 2, lubricating oil in the oil passages 170 is dragged into the wedge-shaped gaps between the seal sliding surface 112 and the protrusions 152. The wedge angle of each wedge-shaped gap gradually decreases toward its narrow side from its wide side close to the adjacent oil passage 170, from which lubricating oil is to be dragged into the wedge-shaped gap. Therefore, the closer to the linear area (on the imaginary axial plane Pax) along which the protrusion 152 can come into sliding contact with the seal sliding surface 112, the stronger the wedge effect tends to be. This effectively increases the oil pressure of the oil film at the linear area such that the protrusion 152 is completely separated from the seal sliding surface 112, and the oil film thickens at the linear area. As a result thereof, it is possible to easily generate fluid lubrication condition between the protrusions 152 and the seal sliding surface 112.

If the protrusions 152 are completely separated from the seal sliding surface 112 by oil film, it is possible to generate fluid lubrication condition in which the seal sliding surface 112 slides relative to the protrusions 152 while not in direct contact with the protrusions 152. By forming such an oil film between the protrusions 152 and the seal sliding surface 112, it is possible to generate fluid lubrication condition between the seal lip 151 and the seal sliding surface 112.

In order to easily generate such fluid lubrication condition, the tightening force of the seal lip 151, which is determined based on the degree of interference between the seal lip 151 and the seal sliding surface 112, is preferably as weak as possible. For this purpose, the base portion of the seal lip 115 where the seal lip 151 is deformed (i.e., bent) outwardly is preferably as thin as possible.

The smaller the maximum height roughness Rz of the seal sliding surface 112 is, the thinner the oil film necessary for generating fluid lubrication condition can be. Thus, the seal sliding surface 112 is not subjected to shot peening so that the maximum height roughness Rz of the seal sliding surface 112 is less than 1 µm. The maximum height roughness Rz is defined byJIS B0601:2013.

The smaller the intervals "d" between the respective circumferentially adjacent pairs of protrusions 152, i.e., the larger the number of the protrusions 152, the more protrusions 152 pass one point of the seal sliding surface 112 when the seal sliding surface 112 circumferentially rotates once relative to the seal lip 151. As a result thereof, one continuous oil film is formed over the entire circumference of the seal sliding surface 112, and wedge effect can be easily generated between all of the protrusions 152 and the seal sliding surface 112 at all times, so that fluid lubrication condition can be generated easily.

The larger the rounded shape of each protrusion 152 (i.e., the larger the curvature radius of the surface 154 of the protrusion 152), the more easily the wedge effect is generated.

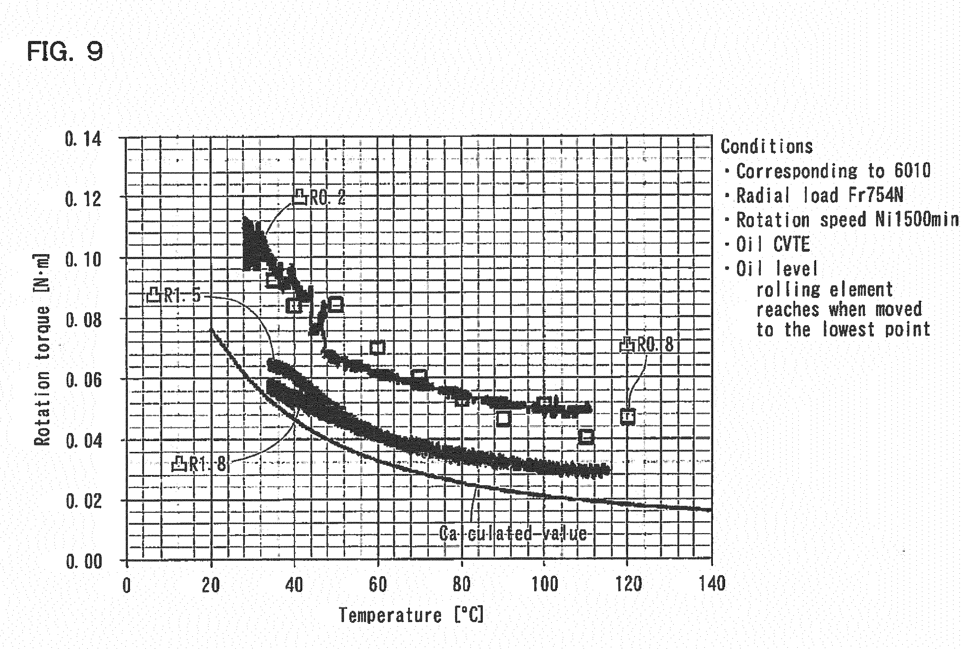

The inventors of the present application conducted an experiment to measure torque values of bearing samples with protrusions 152 having different rounded shape dimensions. The results are shown in Fig. 9. As is apparent from Fig. 9, compared to a bearing sample with protrusions 152 having rounded shape dimensions of 0.2 mm or 0.8 mm, a bearing sample with protrusions 152 having rounded shape dimensions of 1.5 mm showed the smallest torque value at a temperature of 80°C, which is close to the temperature of the environment in which the bearing 100 is actually used. For a bearing sample with protrusions 152 having rounded shape dimensions of 1.8 mm, too, results similar to those of the bearing sample with protrusions 152 having rounded shape dimensions of 1.5 mm were obtained. In order to easily generate the wedge effect, and reduce the torque, the rounded shape dimensions of the protrusions 152 are preferably set at 1.5 mm to 2.0 mm in view of tolerance. The graph of Fig. 9 also illustrates, for reference, a calculated value obtained by theoretically calculating the torque of a bearing including no seals, and used in an oil bath lubricating environment in which the bearing is immersed in oil in the oil bath such that the centers of the rolling elements of the bearing reach the level of the oil surface when the respective rolling elements move to the lowest point. By setting the rounded shape dimensions of the protrusions 152 at 1.5 mm or over and 2.0 mm or less (more preferably at 1.5 mm or over and 1.8 mm or less), it is possible to realize low torque comparable to the calculated torque value shown in Fig. 9, i.e., the torque of a bearing which includes no seals, and thus generates no seal torque, and also considered to be low stirring resistance.

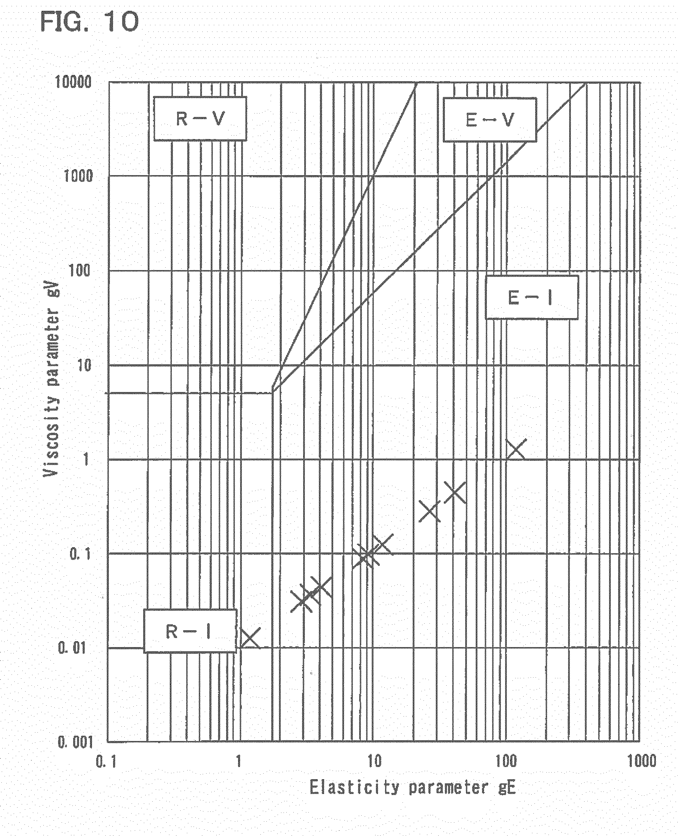

The inventors of the present application calculated the theoretical oil film thickness between the protrusions 152 and the seal sliding surface 112 when the heights "h" of the protrusions 152 are 0.07 mm; the intervals "d" between the protrusions 152 are 0.3 mm or over and 2.6 mm or less; the circumferential widths "w" of the protrusions 152 are 0.2 mm or over and 1.0 mm or less; and the rounded shape dimensions of the protrusions 152 are 0.15 mm or over and less than 2.0 mm. This calculation was conducted by setting the peripheral speed of the seal sliding surface 112 (i.e., the speed at which the seal sliding surface 112 circumferentially rotates relative to the seal lip 151) within the range of 0.02 to 20.2 m/s; and by assuming "CVTE", in which a pulley and a belt of a CVT are lubricated by lubricating oil when its temperature was 30°C and 120°C. As a result thereof, it turned out that under these use conditions, in a lubrication region view in the case of line contact based on viscosity parameter "gv" and elasticity parameter "ge", which are non-dimensional numbers determined by Greenwood-Johnson, lubricating oil is distributed in the equiviscous-rigid body region (R-I mode) or the equiviscous-elastic body region (E-I mode, soft EHL), i.e, fluid lubrication condition is generated. Fig. 10 illustrates the distribution of the calculation result in the above lubrication region view. The plot of Fig. 10 illustrates the lubricating oil corresponding to R-I mode or E-I mode.

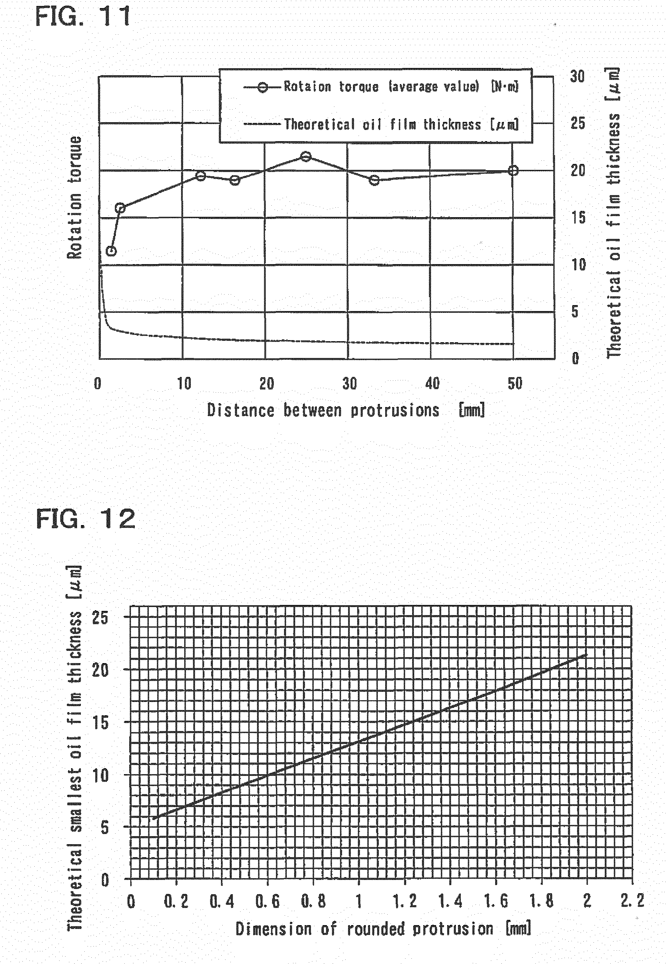

The inventors of the present application found, by calculation, the relationship between the intervals "d" between the protrusions 152 (see Figs. 3 and 4) and the theoretical oil film thickness between the protrusions 152 and the seal sliding surface 112. The inventors of the present application also found, by calculation, the relationship between the rounded shape dimensions of the protrusions 152 and the theoretical oil film thickness between the protrusions 152 and the seal sliding surface 112. The theoretical oil film thickness was calculated by using Martin's minimum film thickness formula in R-I mode, and using Herrebrugh's minimum film thickness formula in E-I mode. The inventors of the present application also investigated, by experiment, the relationship between the intervals "d" between the protrusions 152 and the torque of the sealed bearing 100. Fig. 11 illustrates the relationship between the intervals "d" between the protrusions 152 and the theoretical oil film thickness, and between the intervals d and the torque of the bearing. Fig. 12 illustrates the relationship between the rounded shape dimensions of the protrusions 152 and the theoretical oil film thickness. If the oil film between the protrusions 152 and the seal sliding surface 112 is too thin, the friction coefficient (µ) is large, whereas if the oil film is too thick, it may be difficult to effectively prevent the entry of foreign objects. Taking these factors into consideration, an optimum value for the thickness of an oil film should be found within the range larger than the maximum height roughness Rz.

As can be seen from Fig. 11, according to calculation, if the intervals "d" between the protrusions 152 are 2.6 mm, an oil film whose thickness is about 3 µm (oil film much thicker than the maximum height roughness Rz of less than 1 mm) is formed between the protrusions 152 and the seal sliding surface 112, and in the region where the intervals "d" are less than 2.6 mm, the oil film thickness tends to increases as the intervals d decreases. Fig. 11 further shows that in the region where the intervals "d" are 2.6 mm or less, the bearing torque (i.e., seal torque) tends to decrease as the intervals d decrease. Therefore, the intervals "d" can be set at 2.6 mm or less, but are preferably set at 0.3 mm or more because, if the intervals "d" are less than 0.3 mm, the seal lip 151 cannot be formed easily in a mold.

As can be seen from Fig. 12, according to calculation, if the rounded shape dimensions of the protrusions 152 are 0.15 mm, an oil film whose thickness is 3 µm or more is formed. Therefore, if the heights "h" of the protrusions 152 are set at 0.07 mm, in view of the fact that the seal lip is formed in a mold, the rounded shape dimensions of the protrusions 152 are preferably set at 0.15 mm or over and less than 2.0 mm. If the heights "h" of the protrusions 152 are set at 0.07 mm, the circumferential widths "w" of the protrusions 152 are preferably set at 0.2 mm to 1.0 mm because the circumferential widths "w" are dependent on the rounded shape dimensions of the protrusions 152.

In view of the above calculation results, the heights "h" of the protrusions 152 (see Figs. 2 to 4) are set at 0.07; the intervals "d" between the protrusions 152 are set at 0.3 mm or over and 2.6 mm or less; the circumferential widths "w" of the protrusions 152 are set at 0.2 mm or over and 1.0 mm or less; and the rounded shape dimensions of the protrusion 152 are set at 0.15 mm or over and less than 2.0 mm. Namely, the protrusions 152 of the seal lip 151 are formed such that fluid lubrication condition can be generated between the seal lip 151 and the seal sliding surface 112 with the seal sliding surface 112 rotating at a peripheral speed of 0.2 m/s or more. With the seal sliding surface 112 rotating at a peripheral speed of less than 0.2 m/s, boundary lubrication condition is generated between the protrusions 152 and the seal sliding surface 112. However, if the bearing is used in the transmission of a vehicle, the seal sliding surface 112 quickly reaches the peripheral speed of 0.2 m/s right after the bearing starts to rotate, fluid lubrication condition is generated between the seal lip 151 and the seal sliding surface 112 substantially at all times while the bearing is operating.

For the sealed bearing 100 the seal members 150 prevent foreign objects having such large particle diameters as to adversely affect the life of the bearing from entering the bearing interior space, whereas the friction coefficient (µ) between the seal lips 151 and the seal sliding surfaces 112 due to sliding can be reduced to the limit by fluid lubrication condition so that the seal torque, and thus the bearing torque can be reduced to a large degree (see Figs. 1 and 3).

Also, for the sealed bearing 100 even if the seal sliding surfaces are rotated at such a peripheral speed as would lead to, in conventional sealed bearings, the wear of the seal lips, or heat buildup due to the sliding between the seal lips and the seal sliding surfaces (e.g., 30 m/s or more), since fluid lubrication condition can be generated between each seal lip 151 and the seal sliding surface 112 so that the seal lip 151 and the seal sliding surface 112 are not in direct contact with each other, the seal lips 151 substantially do not become worn, and heat buildup can be reduced. In this way, the sealed bearing 100 of the first embodiment can rotate at such a high speed as was not feasible with conventional sealed bearings.

Also, for the sealed bearing 100 since the protrusions 152 have a rounded shape, even if the protrusions 152 of the seal lips 151 are rubbed against the seal sliding surfaces 112 when the seal members 150 are attached to the outer race 120, the protrusions 152 will be bent in neither of the two opposite circumferential directions, and thus the seal torque will be kept low. If, on the other hand, the protrusions 152 have angular ridges, when the seal members are attached to the outer race, each of the protrusions might be bent in either of the two opposite circumferential directions by being rubbed against the seal sliding surfaces. Therefore, it would be extremely difficult to attach the seal members to the outer race such that all of the protrusions are bent in the direction in which proper wedge-shaped gaps are defined with respect to the direction in which the seal sliding surfaces rotate relative to the respective seal lips. As a result, no sufficient wedge effect would be generated at the protrusions bent in the improper direction, so that the seal torque would not be kept low.

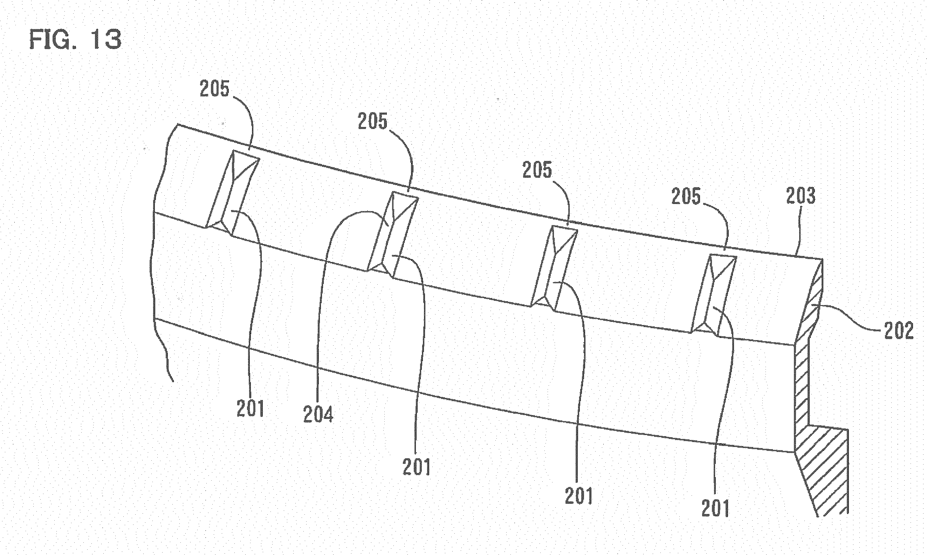

A second bearing, not part of the present invention is now described with reference to Figs. 13 to 15B. The bearing is different from the previous one only in that the protrusions have a different shape. Therefore, only the features different from the features of the previous one are described below.

As illustrated in Fig. 13, the seal lip 202 of the second embodiment includes protrusions 201 whose heights gradually decrease toward the distal edge 203 of the seal lip 202. Fig. 13 is an enlarged perspective view of a portion of the seal lip 202 in its natural state including some of the protrusions 201. In order to gradually decrease the heights of the protrusions 201 toward the distal edge 203 of the seal lip 202, the rounded shape dimension of each protrusion 201 (curvature radius of the surface 204 of the protrusion 201) is gradually increased toward the distal edge 203 of the seal lip 202, and the curvature center of the rounded shape of each protrusion 201 is gradually moved outwardly toward the distal edge 203.

The heights of the protrusions 201 are zero at the distal edge 203 of the seal lip 202, that is, none of the protrusions 201 extends to the distal edge 203 of the seal lip 202, so that the seal lip 203 has a flat surface 205 extending over the entire circumference of the seal lip 202 between the protrusions 201 and the distal edge 203 of the seal lip 202. Thus, the distal edge 203 of the seal lip 202 defines a boundary between the flat surface 205, which is actually a portion of a conical surface extending from the flat surface 205 toward the bearing interior space, and the outer conical surface of the seal lip 202 extending over the entire circumference of the seal lip 202. Namely, the above two conical surfaces intersect with each other along the distal edge 203 of the seal lip 202.

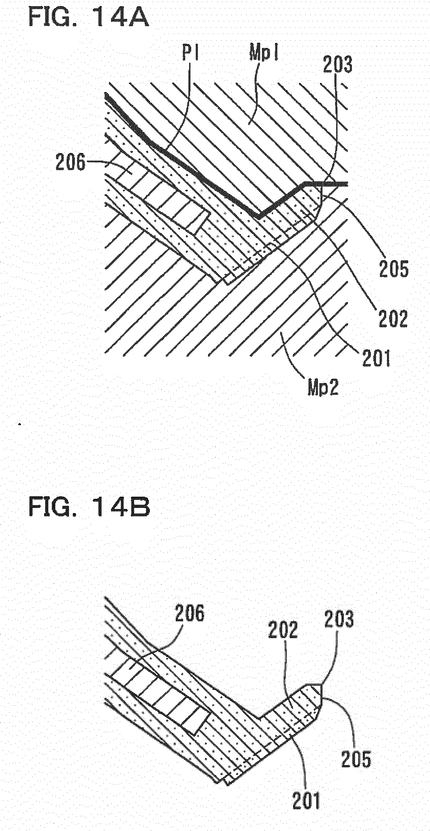

Fig. 14A illustrates how the seal lip 202 is formed by vulcanization, whereas Fig. 14B illustrates the seal lip 202 formed by vulcanization. For better understanding, Figs. 14A and 14B only schematically illustrate the shape of the seal lip 202, and other elements. The seal lip 202 is formed by attaching a rubber sheet to the metal core 206 by vulcanization. At this time, the rubber part of the seal member, which includes the seal lip 202, is formed by sandwiching the rubber sheet between upper and lower mold parts Mp1 and Mp2. The upper and lower mold parts Mp1 and Mp2 are arranged in the vertical direction such that the vertical direction corresponds to the axial direction of the bearing. Therefore, the distal edge 203, which defines the inner diameter of the seal lip 202 in its natural state, defines a boundary between the upper surface of the seal lip 202 which is in contact with the transfer surface of the upper mold part Mp1, and the lower surface of the seal lip 202 which is in contact with the transfer surface of the lower mold part Mp2. In other words, the distal edge 203 is located on the parting line PI of the upper and lower mold parts Mp1 and Mp2, which is the abutment line on which the mold parts Mp1 and Mp2 abut against each other.

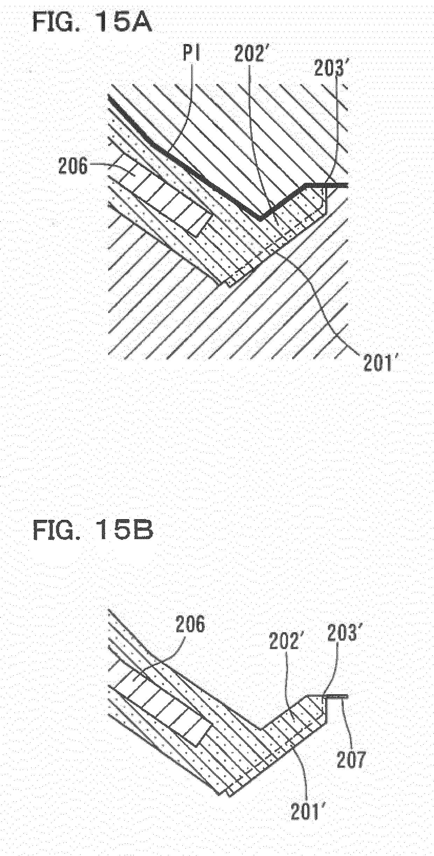

Figs. 15A and 15B illustrate an imaginary seal lip 202' including protrusions 201' extending to the distal edge 203' of the seal lip 202'. For the imaginary seal lip 202', since an uneven surface for forming the protrusions 201' extend to the parting line P1, burrs 207 as illustrated in Fig. 15B tend to be formed after vulcanization. If such burrs 207 are actually formed and then separated from the seal lip 202' while the bearing is operating, oil filters and/or lubricating oil circulation paths might be clogged with such separated burrs.

On the other hand, since, as illustrated in Figs. 14A and 14B, the seal lip 202 has the flat surface 205 between the protrusions 201 and the distal edge 203 of the seal lip 202, an uneven surface for forming the protrusions 201 does not extend to the parting line P1. Therefore, burrs 207 as illustrated in Fig. 15B will not be formed. Thus, by use of the seal member of the second embodiment, it is possible to prevent burrs from being formed on the distal edge 203 of the seal lip 202 when the seal lip 202 is formed by vulcanization.

The heights of the protrusions 201 are zero at the distal edge 203 of the seal lip 202, and the flat surface 205 is disposed between the protrusions 201 and the distal edge 203 of the seal lip 202. As an alternative, however, the heights of the protrusions 201 may be more than zero at the distal edge 203 of the seal lip 202, more specifically, the protrusions 201 may extend to the distal edge 203, provided the heights of the protrusions 201 gradually decrease toward the distal edge 203. If the protrusions 201 extend to the distal edge 203 in this way, an uneven surface for forming the protrusions 201 will be relatively smooth at the parting line, so that burrs will be less likely to be formed on the distal edge 203 of the seal lip 202.

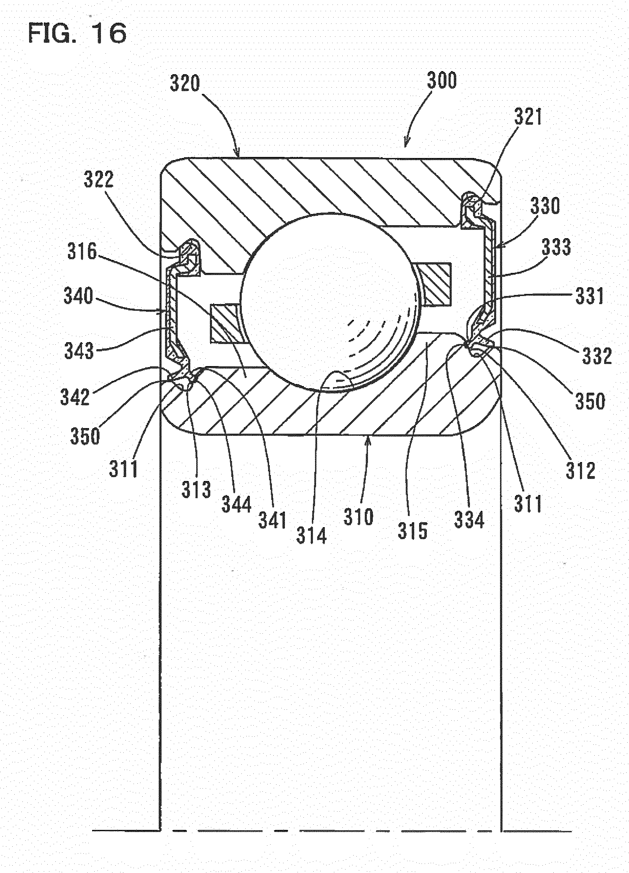

A first embodiment of the present invention is now described with reference to Figs. 16 to 20. The first embodiment corresponds to a combination of the first to fourth preferred arrangements.

The inner race 310 of the sealed bearing 300 of the first embodiment includes seal grooves 311 extending over the entire circumference of the inner race 310. The outer race 320 of the sealed bearing 300 has seal grooves 321 and 322 retaining respective seal members 330 and 340 which seal both ends of the gearing interior space defined between the inner race 310 and the outer race 320.

Each of the seal members 330 and 340 includes a seal lip 331, 341 as an axial seal lip; and an outer lip 332, 342 located outwardly of the seal lip 331, 341. The seal lip 331 and the outer lip 332 branch off from the base portion of the seal member 330 attached to the metal core 333, 343 of the seal member 330, 340.

An axial seal lip means a seal lip fitted, with axial interference, on a seal sliding surface extending along the radial direction or extending at an acute angle of less than 45 degrees relative to the radial direction, thereby generating a sealing effect between the seal lip and the seal sliding surface.

Each seal groove 311 has a side surface as a seal sliding surface 312, 313 whose diameter increases gradually from the bottom of the seal groove 311 toward the raceway groove 314 of the inner race 310, and which is slidable relative to the seal lip 331, 341 of the corresponding seal member 330, 340. The seal sliding surfaces 312 and 313 are each inclined at an acute angle "a" of less than 45 degrees relative to the radial direction.

The inner race 310 includes a pair of shoulders 315 and 316 on the respective sides of its raceway groove 314, of which the load-receiving shoulder 315 (on the right side of Fig. 16), which is configured to receive axial loads, is higher in height than the other, non-load-receiving shoulder. The non-load-receiving shoulder 316 is substantially as high as the shoulders of deep groove ball bearings. Therefore, the ability of the sealed bearing 300 to receive axial loads is superior to that of deep groove ball bearings, while the torque of the sealed bearing 300 is as low as that of deep groove ball bearings. The outer race 320 also includes a load-receiving shoulder and a non-load-receiving shoulder whose heights are different from each other.

The seal sliding surfaces 312 and 313 are formed on the respective shoulders 315 and 316. Due to a large difference between the outer diameters of the load-receiving shoulder 315 and the non-load-receiving shoulder 316, the seal sliding surface 312 on the load-receiving shoulder 315 is different in diameter from, i.e., larger in diameter than, the seal sliding surface 313 on the non-load-receiving shoulder 316. As a result thereof, while the bearing is operating, the peripheral speed of the seal sliding surface 312 is higher than that of the seal sliding surface 313.

While the bearing is operating, the difference between the diameters of the shoulder 315 and 316 generates a pumping effect that tends to cause lubricating oil to flow in the bearing interior space from left to right in Fig. 16.

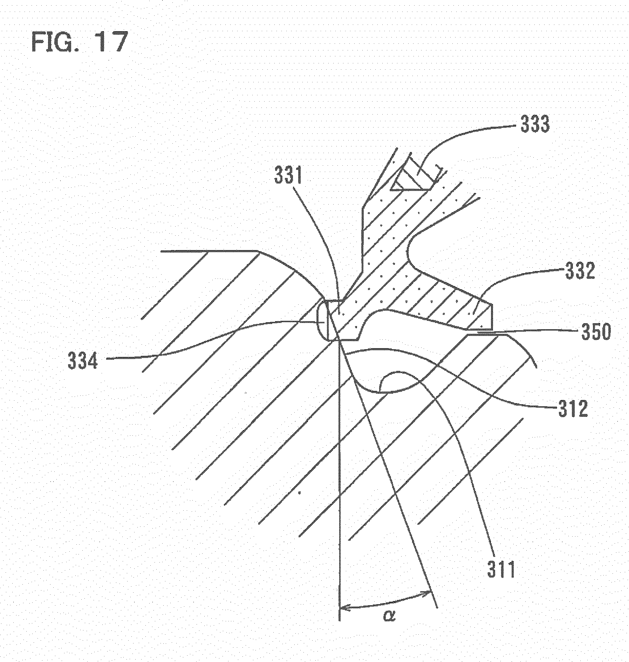

The seal members 330 and 340 on the right and left sides of Fig. 16 are basically identical in structure to each other except that, the seal member 330 has a larger outer diameter than the seal member 340 corresponding to the difference between the diameters of the seal grooves 321 and 322 of the outer race 320 on the right and left sides of Fig. 16, and has a larger inner diameter corresponding to the difference between the diameters of the seal sliding surfaces 312 and 313 of the inner race 310 on the right and left sides of Fig. 16. Therefore, as for the detailed structures of the seal members 330 and 340, only the seal member 330 is illustrated in Figs. 17 to 20. Thus, the elements of the seal member 340 corresponding to the elements of the seal member 330 that are described only with reference to Figs. 17 to 20 are indicated by the corresponding reference numerals in Fig. 16 only, and their description is omitted.

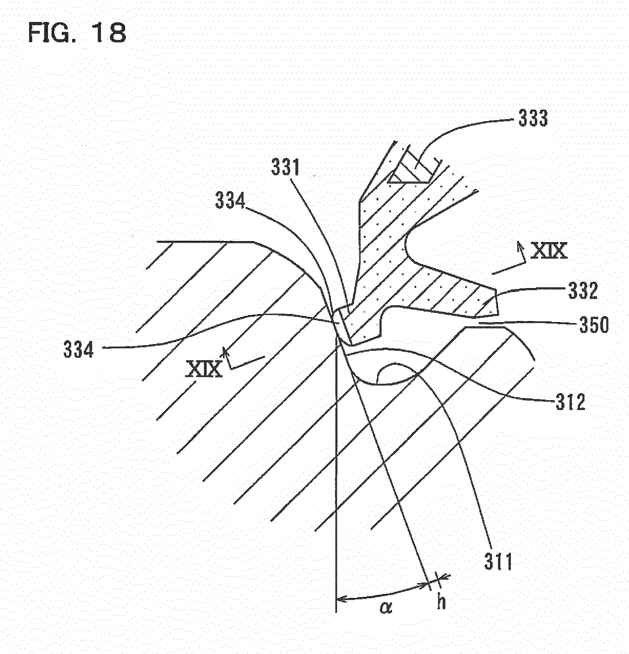

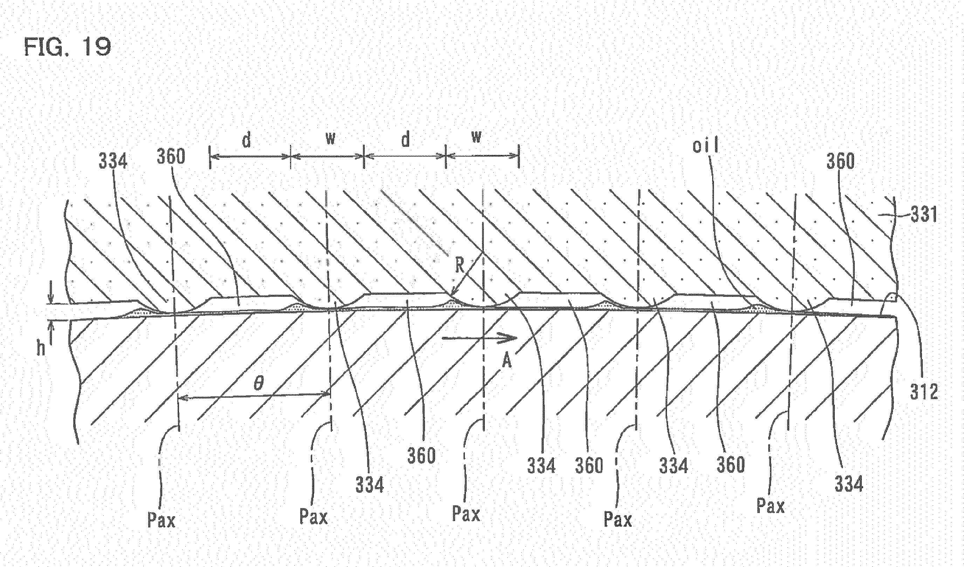

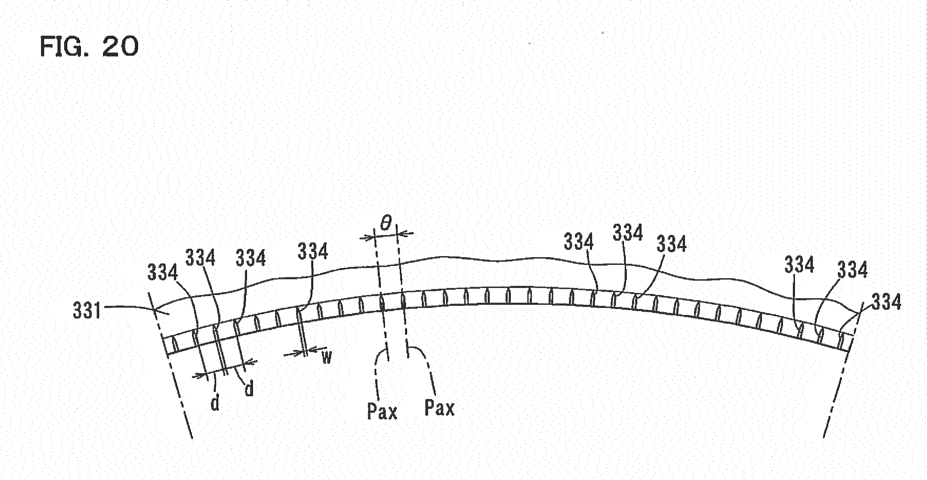

Fig. 17 illustrates an enlarged view of the seal lip 331 of the seal member 330. In Fig. 18, with the seal member 330 attached to the bearing, the seal lip 331 of Fig. 17 is elastically deformed by the interference between the seal lip 331 and the seal sliding surface 312, and oil passages 360 are defined. Fig. 19 is a sectional view taken along line XIX-XIX of Fig. 18. The seal lip 331 is designed such that gaps (including the oil passages 360) defined between the seal sliding surface 312 and the seal lip 331 in directions orthogonal to the seal sliding surface 312 are the narrowest at the section of Fig. 19. Fig. 20 illustrates, with the seal member 330 not attached to the bearing yet, i.e., in its natural state, the external appearance of the seal lip 331 when axially seen from the bearing interior space.

The seal lip 331, 341 of each seal member 330, 340 includes protrusions 334, 344 formed by vulcanization so as to extend in the radial directions (see Fig. 20). In order to illustrate the interference between the seal sliding surface 312, 313 and the protrusions 334, 344, Figs. 16 and 17 illustrate the seal lips 331 and 341 in their natural state. By axially pressing the protrusions 334, 344 of each seal lip 331, 341 against the seal sliding surface 312, 313, the seal lip 331, 341 is inclined to substantially extend along the seal sliding surface 312, 313 (see Fig. 18) so that the above oil passages 360 and wedge-shaped gaps are defined between the sliding surface 312, 313 and the protrusions 334, 344 (see Fig. 19).

The seal lip 331, 341 of each seal member 330, 340 is fitted on the seal sliding surface 312, 313 with axial and radial interference (see Figs. 16 and 17). Due to this interference, the seal lip 331, 341 is axially and radially pressed against the seal sliding surface 312, 313, and thus elastically deformed or bent outwardly, thereby generating a tightening force of the seal lip 331, 341. Mounting errors and manufacturing errors of the seal members 330 and 340 are absorbed by the elastic bend of the seal lip 331, 341.

Each seal sliding surface 312, 313 comprises a conical surface inclined at angle "α" relative to the radial direction, and each protrusion 334, 344 has a height in the direction orthogonal to the seal sliding surface 312, 313 (see Fig. 18).

The protrusions 334, 341 of each seal lip 331, 341 extend to the distal edge of the seal lip 331, 341, and are formed substantially over the entire area of the portion of the seal lip 331, 341 fitted on the seal sliding surface 312, 313 with axial interference (see Fig. 17).

With the heights of the protrusion 334 set at 0.07 mm or less, the protrusions 334 are formed on the seal lip 331 such that fluid lubrication condition can be generated between the seal lip 331 and the seal sliding surface 312. In particular, fluid lubrication condition can be generated by suitably predetermining the intervals "d" between the respective circumferentially adjacent pairs of protrusions 334; the circumferential widths "w" of the protrusions 334; the pitch angles θ at which the protrusions 334 are circumferentially arranged at regular intervals; and the shape of the protrusions 334. The smaller the intervals "d" between the protrusions 334, i.e., the larger the number of the protrusions 334, the more protrusions 334 pass one point of the seal sliding surface 312 when the seal sliding surface 312 circumferentially rotates once relative to the seal lip 331. As a result thereof, one continuous oil film is formed over the entire circumference of the seal sliding surface 312, and wedge effect can be easily generated between all of the protrusions 334 and the seal sliding surface 312 at all times, so that fluid lubrication condition can be generated easily.

As illustrated in Figs. 16 to 18, a labyrinth gap 350 is defined between the outer lip 332, 342 of each seal member 330, 340 and the outer wall portion of the seal groove 311. Due to the labyrinth gap 350, foreign objects having particle diameters of more than 50 µm cannot easily enter the seal grooves 311 from outside the bearing.

The seal member 330 is constituted by a metal core 333; and a vulcanized rubber part including the seal lip 331, the outer lip 332, and a base portion gradually decreasing in axial length from its section attached to the metal core 333 toward the seal lip 331. Each of the seal lip 331 and the outer lip 332 branches off from the base portion, and protrudes like a tongue on the inner peripheral side of the seal member 330.

The protrusions 334 of the seal member 330 on the right side of Fig. 16 are different, both in number and in circumferential pitch angle, from the protrusions 344 of the seal member 340 on the left side of Fig. 16. The purposes of these difference is to form, between the seal member 330 and the seal sliding surface 312 and between the seal member 340 and the seal sliding surface 313, oil films having equal or substantially equal thicknesses and thin enough to prevent foreign objects having particle diameters of more than 50 µm from entering the bearing interior space, in spite of the fact that the lubricating condition between the seal member 330 and the seal sliding surface 312 is different from the lubricating condition between the seal member 340 and the seal sliding surface 313 due to the above-described difference in peripheral speed and pumping effect. Therefore, for the sealed bearing 300 of the first embodiment, it is possible to suitably generate fluid lubrication condition between the seal member 330 and the seal sliding surface 312 on the right side of Fig. 16 and between the seal member 340 and the seal sliding surface 313 on the left side of Fig. 16, and thus to reduce the torque of the bearing, while simultaneously reducing the number of foreign objects entering the bearing interior space.

For the sealed bearing 300 of the first embodiment, since it is difficult for foreign objects to reach the seal lips 331 and 341 due to the labyrinth gaps 350, it is possible to further reduce the number of foreign objects entering the bearing interior space without increasing the torque of bearing. Generally, during the operation of the bearing, the amount by which an axial seal lip axially moves is larger than the amount by which a radial lip moves, so that a large gap might form between the axial seal lip and the seal sliding surface when the axial seal lip axially moves to the maximum. Therefore, it might be difficult to effectively prevent the entry of foreign objects by use of an axial seal lip. However, in the third embodiment, since such a disadvantage of the seal lips 331 and 341, which comprise axial seal lips, is compensated for by the sealing effect of the labyrinth gaps 350, the life of the sealed bearing according to the third embodiment is not very short compared with that of the sealed bearing according to each of the first and second embodiments, in which radial seal lips are used.

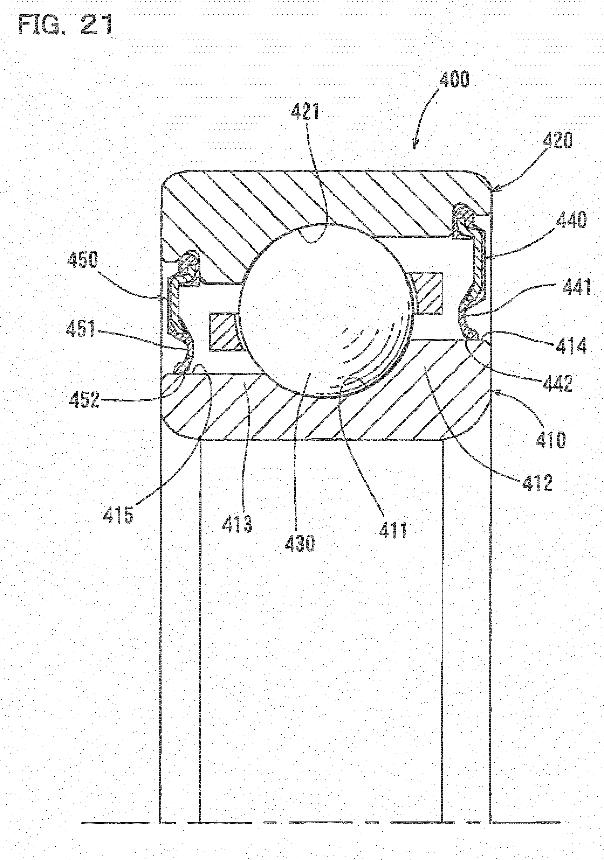

The second embodiment of the present invention is now described with reference to Fig. 21. The second embodiment corresponds to another combination of the first to fourth preferred arrangements.

The sealed bearing 400 of the second embodiment is similar to the sealed bearing 300 of the first embodiment in that the sealed bearing 400 is a ball bearing including an inner race 410 having a raceway groove 411; an outer race 420 having a raceway groove 421; a plurality of balls 430 disposed between the raceway grooves 411 and 421; and two seal members 440 and 450 sealing the respective ends of the bearing interior space defined between the inner race 410 and the outer race 420, and in that the inner race 410 has, on the respective sides of its raceway groove 411, and a pair of shoulders 440 and 450, of which the load-receiving shoulder 412 configured to receive axial loads is higher in height than the other, non-load-receiving shoulder 413. On the other hand, the sealed bearing 400 of the fourth embodiment is similar to the sealed bearing 100 of the first embodiment in that the seal members 440 and 450 include seal lips 441 and 451 comprising radial seal lips.

The inner race 410 has no seal grooves, and has, instead, a cylindrical seal sliding surface 414 defining the outer diameter surface of the load-receiving shoulder 412, and a cylindrical seal sliding surface 415 defining the outer diameter surface of the non-load-receiving shoulder 413. The difference between the diameters of the seal sliding surfaces 414 and 415 on the right and left sides of Fig. 21 is substantially equal to the difference between the diameters of the seal sliding surfaces in the third embodiment, and thus the difference between the peripheral speeds of the seal sliding surfaces 414 and 415 during the operation of the bearing is also substantially equal to the difference between the peripheral speeds of the seal sliding surfaces in the first embodiment. As a result thereof, the difference in number and circumferential pitch angle between the protrusions 442 of the seal member 440 on the right side of Fig. 21 and the protrusions 452 of the seal member 450 on the left side of Fig. 21 is also substantially equal to the difference in number and circumferential pitch angle between the protrusions of the seal members in the third embodiment. Due to this, in the sealed bearing 400 of the second embodiment, too, oil films having equal or substantially equal, and optimum thicknesses are formed, respectively, between the seal member 440 and the seal sliding surface 414 and between the seal member 450 and the seal sliding surface 415 such that fluid lubrication condition is generated, thereby making it possible to reduce the torque of the bearing, while simultaneously reducing the number of foreign objects entering the bearing interior space.

Namely, in the sealed bearing 400 (ball bearing), since the protrusions 442 of the seal member 440 on the right side of Fig. 21 are different in number and circumferential pitch angle θ (see Fig. 3) from the protrusions 452 of the seal member 450 on the left side of Fig. 21, by suitably setting the number of protrusions 442 of the seal member 440 on the load-receiving side (right in Fig. 21) that pass one point of the seal sliding surface 414, and the number of protrusions 452 of the seal member 452 on the non-load-receiving side (left in Fig. 21) that pass one point of the seal sliding surface 415, when the inner and outer races 410 and 420 rotate once relative to each other, it is possible to form, on the right and left sides of the bearing, oil films having equal or substantially equal, and optimum thicknesses such that fluid lubrication condition is generated, thereby making it possible to reduce the torque of the bearing, while simultaneously reducing the number of foreign objects entering the bearing interior space.

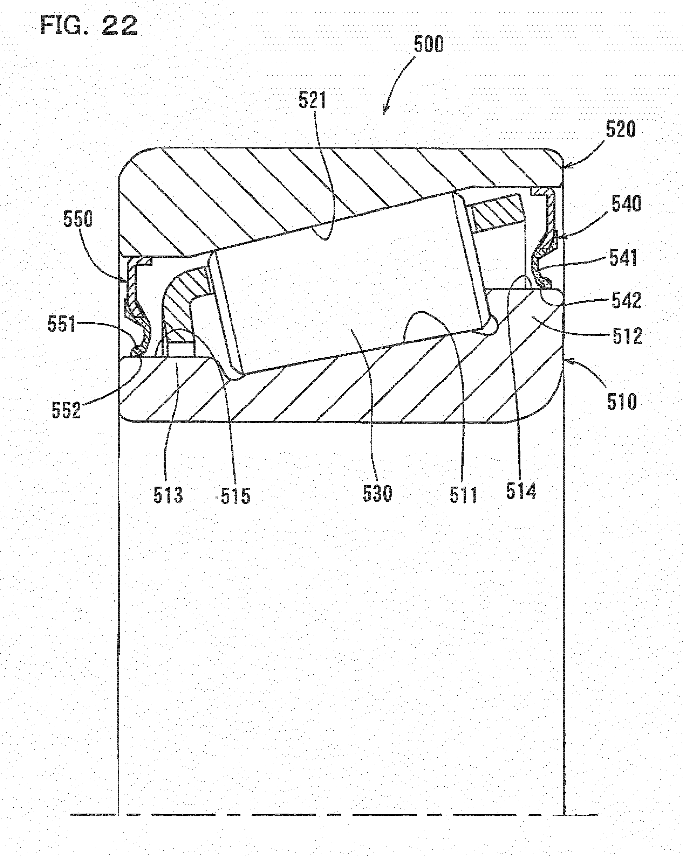

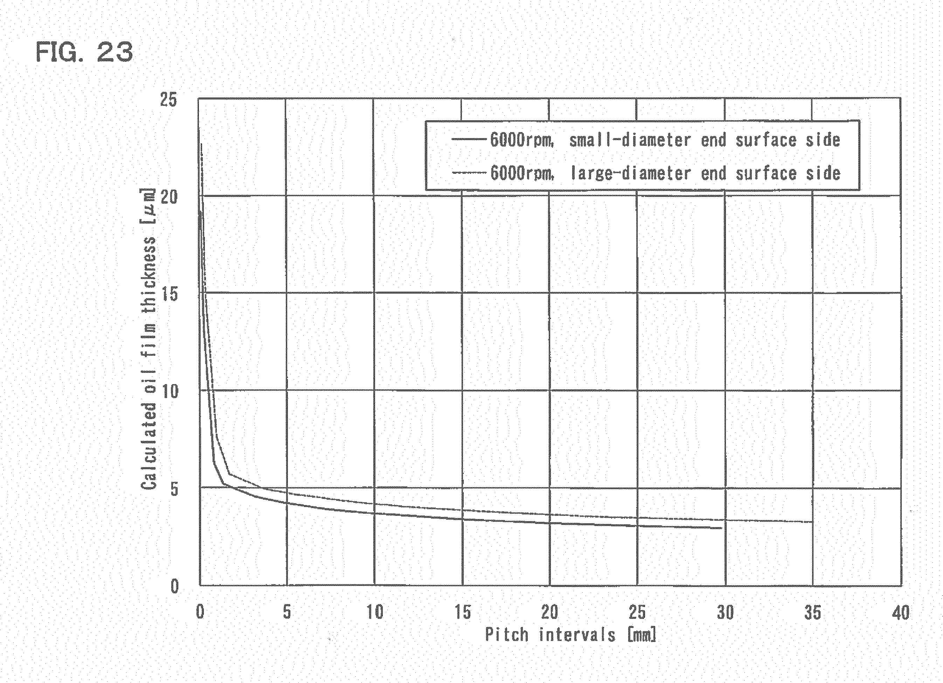

A bearing, not part of the present invention is now described with reference to Figs. 22 and 23.

The sealed bearing 500 is a tapered roller bearing to which the first group of the present invention is applied, and which includes, as illustrated in Fig. 22, an inner race 510 having a raceway surface 511, a large-diameter flange 512, and a small-diameter flange 513; an outer race 520 having a raceway surface 521; a plurality of tapered rollers 530 disposed between the raceway surfaces 511 of the inner race 510 and the raceway surface 521 of the outer race 520; and two seal members 540 and 550 sealing the respective ends of the bearing interior space defined between the inner race 510 and the outer race 520.

While the bearing is operating, the large-diameter flange 512 guides the large-diameter end surfaces of the tapered rollers 530, and receives axial loads. The small-diameter flange 513 has an outer diameter smaller than that of the large-diameter flange 512, and supports the small-diameter end surfaces of the tapered rollers 530, thereby preventing the tapered rollers 530 from separating from the inner race 510.

The outer race 520 has no seal grooves, and the metal cores of the seal members 540 and 550 are press-fitted to the inner periphery of the outer race 520 at its respective ends.

The seal members 540 and 550 include, respectively, seal lips 541 and 551 comprising radial lips. The inner race 510 has a cylindrical, seal sliding surface 514 defining the outer diameter surface of the large-diameter flange 512, and circumferentially slidable relative to the seal lip 541 of the seal member 540 on the right side of Fig. 22; and a cylindrical, seal sliding surface 515 defining the outer diameter surface of the small-diameter flange 513, and circumferentially slidable relative to the seal lip 551 of the seal member 550 on the left side of Fig. 22. Since a large difference is set between the diameters of the seal sliding surfaces 514 on the large-diameter flange 512 and the seal sliding surface 515 on the small-diameter flange 513, while the bearing is operating, the seal sliding surface 514 on the right side of Fig. 22 is higher in peripheral speed than the seal sliding surface 515 on the left side of Fig. 22. Also, while the bearing is operating, the difference between the diameters of the seal sliding surfaces 514 and 515 generates such a pumping effect as allowing lubricating oil to flow in the bearing interior space from the left side of Fig. 22 to the right side of the Fig. 22.

Protrusions 542 and 552 are formed, respectively, on the seal lips 541 and 551 so as to define such wedge-shaped gaps and oil passages as illustrated in Fig. 3. Therefore, it is possible to generate fluid lubrication condition between the seal lip 541 and the seal sliding surface 514 and between the seal lip 551 and the seal sliding surface 515.

The protrusions 542 of the seal member 540 on the right side of Fig. 22 are different, both in number and in circumferential pitch angle, from the protrusions 552 of the seal member 550 on the left side of Fig. 22. These differences are set for the purpose of forming, on the right and left sides of Fig. 22, oil films having equal or substantially equal, and optimum thicknesses, in spite of the fact that the lubricating condition between the seal member 540 and the seal sliding surface 514 on the right side of Fig. 22 is different from the lubricating condition between the seal member 550 and the seal sliding surface 515 on the left side of Fig. 22 due to the above-described difference in peripheral speed and pumping effect,.

Fig. 23 illustrates the relationship between theoretical oil film thickness and the intervals "d" between the protrusions 542, 552 of each seal lip. The calculation result of Fig. 23 shows that when the intervals "d" (indicated as "pitch intervals" in Fig. 23) between the protrusions 552 on the side of the small-diameter flange 513 (indicated as "small-diameter end surface side" in Fig. 23) are 6.4 mm, the theoretical oil film thickness is 4.0 pm, whereas when the intervals "d" (indicated as "pitch intervals" in Fig. 23) between the protrusions 542 on the side of the large-diameter flange 512 (indicated as "large-diameter end surface side" in Fig. 23) are 11.5 mm, the theoretical oil film thickness is 4.0 µm. As is apparent from this calculation result, it is possible to form oil films having an equal or substantially equal thickness, respectively, between the seal lip 541 and the seal sliding surface 514 and between the seal lip 551 and the seal sliding surface 515 by making the protrusions 542 differ from the protrusions 552 in number and circumferential pitch angle, which are parameters determining the intervals "d".

If gaps much larger than 0.07 mm are defined between the seal lip 541 and the seal sliding surface 514 and between the seal lip 551 and the seal sliding surface 515 due to too thick oil films, foreign objects having particle diameters of more than 50 µm are likely to enter the bearing interior space. By setting the thickness of oil films at a value capable of preventing the entry of such foreign objects, and making the protrusions 542 differ from the protrusions 552 in number and circumferential pitch angle, which are parameters determining the intervals "d", it is possible to form oil films having an optimal thickness, respectively, between the seal member 540 and the seal sliding surface 514 on the right side of Fig. 22 and between the seal member 550 and the seal sliding surface 515 on the left side of Fig. 22.

As described above, in the sealed bearing 500 , it is possible to suitably generate fluid lubrication condition between the seal member 540 and the seal sliding surface 514 on the right side of Fig. 22 and between the seal member 550 and the seal sliding surface 515 on the left side of Fig. 22, and thus to reduce the torque of the bearing, and the number of foreign objects entering the bearing interior space.

Due to the reason that tapered roller bearings are larger in torque than ball bearings, some conventional tapered roller bearings do not include seal members. If a tapered roller bearing includes no seal members, a large amount of lubricant is likely to flow into the tapered roller bearing due to the pumping effect generated by the bearing's shape, thereby increasing the stirring resistance of the lubricant. Also, foreign objects enter the bearing together with the lubricant. Therefore, the inner and outer races of the tapered roller bearing need to be subjected to hardening treatment such as special heat treatment so that no cuts are formed on the raceway surfaces of the tapered roller bearing by the entering foreign objects. In contrast thereto, the sealed bearing 500 comprises a tapered roller bearing, but can include the seal members 540 and 550, because the torque of the sealed bearing 500 can be kept low due to the above-described fluid lubrication condition. The seal members 540 and 550 can reduce the amount of lubricant flowing into the bearing due to the pumping effect, and thus reduce the stirring resistance of lubricant. As a result thereof, it is possible to reduce the torque of the tapered roller bearing 500. Moreover, since the seal members 540 and 550 can prevent foreign objects from entering the bearing together with lubricant, it is possible to dispense with special treatment with respect to the inner and outer races 510 and 520, and thus to reduce costs.

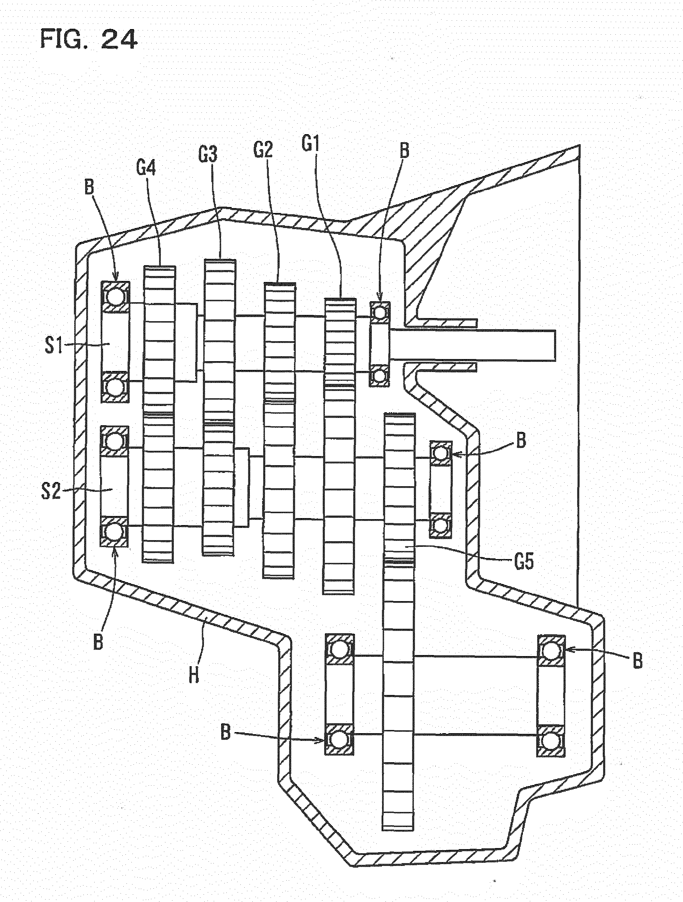

Fig. 24 illustrates the transmission of a vehicle in which sealed bearings B (rolling bearings) according to any of the first to second embodiments of the present invention are used to support rotary members of the transmission. The shown transmission is a multistage transmission capable of changing gear ratio in a stepwise manner, and including rotary members (e.g., an input shaft S1 and an output shaft S2) rotatably supported by the sealed bearings B. The shown transmission includes the input shaft S1, to which the rotation of the engine of the vehicle is input; the output shaft S2, which extends in parallel to the input shaft S1; a plurality of gear trains G1-G4 through which the rotation of the input shaft S1 is transmitted to the output shaft S2; and clutches (not shown) mounted between the input shaft S1 and the respective gear trains G1-G4 or between the output shaft S2 and the respective gear trains G1-G4. By selectively engaging these clutches, it is possible to change, in each of the gear trains G1- G4, the gear ratio of the rotation transmitted from the input shaft S1 to the output shaft S2. The rotation of the output shaft S2 is output to an output gear G5, and the rotation of the output gear S5 is transmitted to e.g., the differential of the vehicle. The input and output shaft S1 and S2 are rotatably supported by the sealed bearings B. In the shown transmission, each sealed bearing B receives, on its lateral sides, lubricating oil splashed due to the rotation of the gears or lubricating oil injected from nozzles (not shown) mounted in the housing H of the transmission.

In each of the above-described embodiments, the protrusions have a rounded shape, but may have a different shape, provided that wedge effect can be ensured such that fluid lubrication condition can be generated between the protrusions and the seal sliding surface while the relative peripheral speeds are equal to or higher than a predetermined value. For example, the protrusions may have chamfers such as round chamfers or flat chamfers.

In each of the above-described embodiments,, protrusions are circumferentially arranged at equal intervals, but may be circumferentially arranged at irregular intervals. Moreover, instead of such protrusions, a single protrusion may be disposed only on one circumferential portion of the seal lip. Even such a single protrusion can define oil passages, and effectively reduce the seal torque.

In each of the above-described embodiments,, the present invention is applied to a seal member comprising a metal core and a vulcanized rubber part, but may be applied to a seal member made of a single material such as rubber or resin, and including a seal lip capable of being fitted with predetermined interference.

In each of the above-described embodiments, the present invention is applied to an angular ball bearing of which the inner race is rotatable, but may be applied to an angular ball bearing of which the outer race is rotatable.

### DESCRIPTION OF REFERENCE NUMERALS

100, 300, 400, 500, B: sealed bearing
110, 310, 410, 510: inner race
111, 121, 314, 411, 421: raceway groove
112, 312, 313, 414, 415, 514, 515: seal sliding surface (first/second seal sliding surface)
120, 320, 420, 520: outer race
122, 311, 321, 322: seal groove
140: rolling element
150, 330, 340, 440, 450, 540, 550: seal member (first/second seal member)
151, 202, 331, 341, 441, 451, 541, 551: seal lip (first/second seal lip)
152, 201, 334, 344, 442, 452, 542, 552: protrusion (first/second protrusion)
153, 203: distal edge
154, 204: surface
155, 206, 333, 343: metal core
156: vulcanized rubber part
160: bearing interior space
170, 360: oil passage
205: surface
315, 316, 412, 413: shoulder
332, 342: outer lip
350: labyrinth gap
430: ball
511, 521: raceway surface
512: large-diameter flange
513: small-diameter flange
530: tapered roller bearing
S1: input shaft (rotary member)
S2: output shaft (rotary member)

## Claims

1. A sealed bearing defining a bearing interior space (160), the sealed bearing comprising:
a seal member (150) separating the bearing interior space (160) from a bearing exterior of the sealed bearing, the seal member including a seal lip (151);
a seal sliding surface (112) slidable in a circumferential direction relative to the seal lip (151); and
a plurality of protrusions (152) disposed on the seal lip (151), and defining, between the seal sliding surface (112) and the seal lip (151), oil passages (170) communicating with the bearing interior space (160) and the bearing exterior;
wherein wedge-shaped gaps are defined between the seal sliding surface (112) and each of the protrusions (152) of the seal lip (151) so as to be each larger on a side of a corresponding one of the oil passages (170) than on a side of the protrusion (152), and
wherein the protrusions (152) are arranged in the circumferential direction at intervals of 0.3 mm to 2.6 mm, the sealed bearing further comprising
an inner race (410) having a raceway groove (411);
an outer race (420) having a raceway groove (421); and
a plurality of balls (430) disposed between the raceway groove (411) of the inner race (410) and the raceway groove (421) of the outer race (420); wherein the bearing interior space is defined between the inner race (410) and the outer race (420), chracterized in that
the inner race (410) has, on respective sides of the raceway groove (411) of the inner race (410), a pair of shoulders (412, 413) comprising a load-receiving shoulder (412) configured to receive an axial load, and a non-load-receiving shoulder (413), the load-receiving shoulder (412) being higher in height than the non-load-receiving shoulder (413),
wherein the seal member comprises first and second seal members sealing respective ends of the bearing interior space, the first and second seal members including first (441) and second (451) seal lips respectively, and
wherein the seal sliding surface comprises first and second seal sliding surfaces (414, 415) disposed, respectively, on the load receiving shoulder (412) and on the non-load receiving shoulder (413),
wherein the first seal sliding surface (414) on the load receiving shoulder (412) is different in diameter from the second seal sliding surface (415) on the non-load receiving shoulder (413),
wherein the first seal member (440) is disposed close to the first seal sliding surface (414), and the second seal member (450) is disposed close to the second seal sliding surface (415),
wherein the plurality of protrusions comprise at least one first protrusion (442) disposed on one circumferential portion of the first seal lip (441), and at least one second protrusion (452) disposed on one circumferential portion of the second seal lip (451), and
wherein the at least one first protrusion (442) is different in number from the at least one second protrusion (452), and
wherein a circumferential pitch angle with which the at least one first protrusion (442) is arranged is different from a circumferential pitch angle with which the at least one second protrusion (452) is arranged.

2. The sealed bearing according to claim 1, wherein the protrusions (152) extend in directions orthogonal to the circumferential direction, and
wherein each of the protrusions (152) has a rounded shape rounded such that the protrusion (152) gradually approaches the seal sliding surface (112) from two circumferential ends of the protrusion (152) toward a circumferential center of the protrusion (152).

3. The sealed bearing according to claim 2, wherein heights of the protrusions (152) are set at 0.07 mm or less.

4. The sealed bearing according to claim 3, wherein a radius of the protrusions (152) is set at 0.15 mm or over and less than 2.0 mm, and
wherein circumferential widths of the protrusions (152) are set at 0.2 mm or over and 1.0 mm or less.

5. The sealed bearing according to claim 1, wherein the seal lip (331, 341) comprises an axial seal lip.

6. The sealed bearing according to claim 5, wherein the seal member (330, 340) includes an outer lip (332, 342) defining a labyrinth gap (350) between the outer lip (332, 342) and a portion of the sealed bearing located outwardly of the seal sliding surface (312, 313).

7. The sealed bearing according to claim 1, wherein the seal lip (441, 451) comprises a radial seal lip.

8. The sealed bearing according to claim 1, wherein the seal lip (334, 344) comprises an axial seal lip.

9. The sealed bearing according to claim 1, wherein each of the at least one first protrusion (334, 442) and the at least one second protrusion (344, 452) extends in the direction orthogonal to the circumferential direction, and has a rounded shape rounded such that the protrusion gradually approaches a corresponding one of the first and second seal sliding surfaces (312, 414, 313, 415) from two circumferential ends of the protrusion toward a circumferential center of the protrusion.

10. The sealed bearing according to any one of claims 1 to 9,
wherein the plurality of protrusions (152) are arranged at equal intervals over an entire circumference of the seal lip, and
wherein the at least one first protrusion (334, 442) comprises a plurality of first protrusions arranged at equal intervals over an entire circumference of the seal lip, and the at least one second protrusion (344, 452) comprises a plurality of second protrusions arranged at equal intervals over an entire circumference of the seal lip.

11. The sealed bearing according to any one of claims 1 to 10, wherein the seal member according to claim 1 or 6 or each of the first and second seal members according to claim 1 comprises a metal core (155, 206, 333, 343); and
a vulcanized rubber part (156) attached to at least a radially inner portion of the metal core (155, 206, 333, 343), and
wherein the seal lip (151, 202, 331, 341, 441, 451) is a portion of the vulcanized rubber part (156) of the seal member or a portion of one of the vulcanized rubber parts (156) of the first and second seal members.

12. The sealed bearing according to any one of claims 1 to 11, supporting at least one rotary member (S1, S2) of one of a transmission of a vehicle and a differential of a vehicle.

## Patentansprüche

1. Gedichtetes Lager, das einen Lager-Innenraum (160) aufweist, wobei das gedichtete Lager umfasst:
ein Dichtungselement (150), das den Lager-Innenraum (160) von einer Lager-Außenseite des gedichteten Lagers trennt, wobei das Dichtungselement eine Dichtlippe (151) enthält;
eine Dichtungs-Gleitfläche (112), die in einer Umfangsrichtung relativ zu der Dichtlippe (151) verschoben werden kann; und
eine Vielzahl von Vorsprüngen (152), die an der Dichtlippe (151) angeordnet sind und zwischen der Dichtungs-Gleitfläche (112) und der Dichtlippe (151) Ölkanäle (170) bilden, die mit dem Lager-Innenraum (160) und der Lager-Außenseite in Verbindung stehen;
wobei keilförmige Spalte zwischen der Dichtungs-Gleitfläche (112) und jedem der Vorsprünge (152) der Dichtlippe (151) so ausgebildet sind, dass sie jeweils an einer Seite eines entsprechenden der Ölkanäle (170) größer sind als an einer Seite des Vorsprungs (152), und
die Vorsprünge (152) in der Umfangsrichtung in Abständen von 0,3 mm bis 2,6 mm angeordnet sind, wobei das gedichtete Lager des Weiteren umfasst:
einen Innenring (410) mit einer Laufbahn-Nut (411);
einen Außenring (420) mit einer Laufbahn-Nut (421); sowie
eine Vielzahl von Kugeln (430), die zwischen der Laufbahn-Nut (411) des Innenrings (410) und der Laufbahn-Nut (421) des Außenrings (420) angeordnet sind, wobei der Lager-Innenraum zwischen dem Innenring (410) und dem Außenring (420) ausgebildet ist, **dadurch gekennzeichnet, dass**
der Innenring (410) an jeweiligen Seiten der Laufbahn-Nut (411) des Innenrings (410) ein Paar Schultern (412, 413) aufweist, die eine Lastaufnahme-Schulter (412), die zum Aufnehmen einer axialen Last ausgeführt ist, und eine Nicht-Lastaufnahme-Schulter (413) umfassen, wobei die Lastaufnahme-Schulter (412) höher ist als die Nicht-Lastaufnahme-Schulter (413),
wobei das Dichtungselement ein erstes und ein zweites Dichtungselement umfasst, die jeweilige Enden des Lager-Innenraums abdichten, wobei das erste und das zweite Dichtungselement eine erste (441) bzw. eine zweite (451) Dichtlippe enthalten, und
die Dichtungs-Gleitfläche eine erste und eine zweite Dichtungs-Gleitfläche (414, 415) umfasst, die an der Lastaufnahme-Schulter (412) bzw. an der Nicht-Lastaufnahme-Schulter (413) angeordnet sind,
sich die erste Dichtungs-Gleitfläche (414) an der Lastaufnahme-Schulter (412) hinsichtlich des Durchmessers von der zweiten Dichtungs-Gleitfläche (415) an der Nicht-Lastaufnahme-Schulter (413) unterscheidet,
das erste Dichtungselement (440) nahe an der ersten Dichtungs-Gleitfläche (414) angeordnet ist und das zweite Dichtungselement (450) nahe an der zweiten Dichtungs-Gleitfläche (415) angeordnet ist,
die Vielzahl von Vorsprüngen wenigstens einen ersten Vorsprung (442), der an einem Umfangsabschnitt der ersten Dichtlippe (441) angeordnet ist, und wenigstens einen zweiten Vorsprung (452) umfasst, der an einem Umfangsabschnitt der zweiten Dichtlippe (451) angeordnet ist, und
die Anzahl des wenigstens einen ersten Vorsprungs (442) sich von der des wenigstens einen zweiten Vorsprungs (452) unterscheidet, und
ein Umfangs-Teilungswinkel, in dem der wenigstens eine erste Vorsprung (442) angeordnet ist, sich von einem Umfangs-Teilungswinkel unterscheidet, in dem der wenigstens eine zweite Vorsprung (452) angeordnet ist.

2. Gedichtetes Lager nach Anspruch 1, wobei sich die Vorsprünge (152) in Richtungen senkrecht zu der Umfangsrichtung erstrecken, und
jeder der Vorsprünge (152) eine abgerundete Form hat, die so abgerundet ist, dass sich der Vorsprung (152) von zwei Umfangsenden des Vorsprungs (152) zu einer Umfangs-Mitte des Vorsprungs (152) hin allmählich der Dichtungs-Gleitfläche (112) nähert.

3. Gedichtetes Lager nach Anspruch 2, wobei die Höhen der Vorsprünge (152) auf 0,07 mm oder weniger festgelegt sind.

4. Gedichtetes Lager nach Anspruch 3, wobei ein Radius der Vorsprünge (152) auf 0,15 mm oder mehr und weniger als 2,0 mm festgelegt ist, und
Umfangs-Breiten der Vorsprünge (152) auf 0,2 mm oder mehr und 1,0 mm oder weniger festgelegt sind.

5. Gedichtetes Lager nach Anspruch 1, wobei die Dichtlippe (331, 341) eine axiale Dichtlippe umfasst.

6. Gedichtetes Lager nach Anspruch 5, wobei das Dichtungselement (330, 340) eine äußere Lippe (332, 342) enthält, die einen Labyrinth-Spalt (350) zwischen der äußeren Lippe (332, 342) und einem Abschnitt des gedichteten Lagers bildet, der sich außerhalb der Dichtungs-Gleitfläche (312, 313) befindet.

7. Gedichtetes Lager nach Anspruch 1, wobei die Dichtlippe (441, 451) eine radiale Dichtlippe umfasst.

8. Gedichtetes Lager nach Anspruch 1, wobei die Dichtlippe (334, 344) eine axiale Dichtlippe umfasst.

9. Gedichtetes Lager nach Anspruch 1, wobei sich der wenigstens eine erste Vorsprung (334, 442) und der wenigstens eine zweite Vorsprung (344, 452) jeweils in der Richtung im rechten Winkel zu der Umfangsrichtung erstrecken und eine abgerundete Form haben, die so abgerundet ist, dass sich der Vorsprung von zwei Umfangsenden des Vorsprungs her zu einer Umfangs-Mitte des Vorsprungs hin allmählich einer entsprechenden von der ersten und der zweiten Dichtungs-Gleitfläche (312, 414, 313, 415) nähert.

10. Gedichtetes Lager nach einem der Ansprüche 1 bis 9,
wobei die Vielzahl von Vorsprüngen (152) in gleichen Abständen über einen gesamten Umfang der Dichtlippe angeordnet sind, und
der wenigstens eine erste Vorsprung (334, 442) eine Vielzahl erster Vorsprünge umfasst, die in gleichen Abständen über einen gesamten Umfang der Dichtlippe angeordnet sind, und der wenigstens eine zweite Vorsprung (344, 452) eine Vielzahl zweiter Vorsprünge umfasst, die in gleichen Abständen über einen gesamten Umfang der Dichtlippe angeordnet sind.

11. Gedichtetes Lager nach einem der Ansprüche 1 bis 10, wobei das Dichtungselement nach Anspruch 1 oder 6 oder jedes von dem ersten und dem zweiten Dichtungselement nach Anspruch 1 einen Metallkern (155, 206, 333, 343); sowie
ein vulkanisiertes Gummiteil (156) umfasst, das an wenigstens einem radial innen liegenden Abschnitt des Metallkerns (155, 206, 333, 343) angebracht ist, und
wobei die Dichtlippe (151, 202, 331, 341, 441, 451) ein Abschnitt des vulkanisierten Gummiteils (156) des Dichtungselementes oder ein Abschnitt eines der vulkanisierten Gummiteile (156) des ersten und des zweiten Dichtungselementes ist.

12. Gedichtetes Lager nach einem der Ansprüche 1 bis 11, das wenigstens ein Drehelement (S1, S2) eines Getriebes eines Fahrzeugs oder eines Differentials eines Fahrzeugs trägt.

## Revendications

1. Roulement étanche définissant un espace intérieur de roulement (160), le roulement étanche comprenant :
un élément formant joint étanche (150) séparant l'espace intérieur de roulement (160) de l'extérieur du roulement étanche, l'élément formant joint étanche comprenant une lèvre d'étanchéité (151) ;
une surface de glissement de joint (112) pouvant glisser dans une direction circonférentielle par rapport à la lèvre d'étanchéité (151) ; et
une pluralité de saillies (152) disposées sur la lèvre d'étanchéité (151) et définissant, entre la surface de glissement de joint (112) et la lèvre d'étanchéité (151), des passages d'huile (170) communiquant avec l'espace intérieur de roulement (160) et l'extérieur du roulement ;
dans lequel des fentes en forme de coin sont définies entre la surface de glissement de joint (112) et chacune des saillies (152) de la lèvre d'étanchéité (150), de sorte à être chacune plus large du côté d'un des passages d'huile (170) lui correspondant que du côté de la saillie (152), et
dans lequel les saillies (152) sont agencées dans la direction circonférentielle à des intervalles compris entre 0,3 mm et 2,6 mm, le roulement étanche comprenant en outre
une bague intérieure (410) pourvue d'une rainure formant chemin de roulement (411) ;
une bague extérieure (420) pourvue d'une rainure formant chemin de roulement (421) ; et
une pluralité de billes (430) disposées entre la rainure formant chemin de roulement (411) de la bague intérieure (410) et la rainure formant chemin de roulement (421) de la bague extérieure (420) ; dans lequel l'espace intérieur de roulement est défini entre la bague intérieure (410) et la bague extérieure (420), **caractérisé en ce que**
la bague intérieure (410) présente, sur les côtés respectifs de la rainure formant chemin de roulement (411) de la bague intérieure (410), une paire d'épaulements (412, 413) comprenant un épaulement récepteur de charge (412) configuré pour recevoir une charge axiale et un épaulement non récepteur de charge (413), l'épaulement récepteur de charge (412) ayant une hauteur supérieure à celle de l'épaulement non récepteur de charge (413),
dans lequel l'élément formant joint étanche comprend un premier et un second élément formant joint qui assurent l'étanchéité des extrémités respectives de l'espace intérieur de roulement, les premier et second éléments formant joint incluant une première (441) et une seconde (451) lèvre d'étanchéité, respectivement, et
dans lequel la surface de glissement de joint comprend une première et une seconde surface de glissement de joint (414, 415) disposées, respectivement, sur l'épaulement récepteur de charge (412) et sur l'épaulement non récepteur de charge (413),
dans lequel la première surface de glissement de joint (414) sur l'épaulement récepteur de charge (412) a un diamètre différent de la seconde surface de glissement de joint (415) sur l'épaulement non récepteur de charge (413),
dans lequel le premier élément formant joint (440) est disposé près de la première surface de glissement de joint (414) et le second élément formant joint (450) est disposé près de la seconde surface de glissement de joint (415),
dans lequel la pluralité de saillies comprend au moins une première saillie (442) disposée sur une portion circonférentielle de la première lèvre d'étanchéité (441) et au moins une seconde saillie (452) disposée sur une portion circonférentielle de la seconde lèvre d'étanchéité (451), et
dans lequel l'au moins une première saillie (442) est différente en nombre de l'au moins une seconde saillie (452), et
dans lequel un angle de pas circonférentiel selon lequel l'au moins une première saillie (442) est agencée est différent d'un angle de pas circonférentiel selon lequel l'au moins une seconde saillie (452) est agencée.

2. Roulement étanche selon la revendication 1, dans lequel les saillies (152) s'étendent dans des directions orthogonales à la direction circonférentielle, et
dans lequel chacune des saillies (152) a une forme arrondie qui est arrondie de sorte que la saillie (152) approche graduellement de la surface de glissement de joint (112) depuis deux extrémités circonférentielles de la saillie (152) vers un centre circonférentiel de la saillie (152).

3. Roulement étanche selon la revendication 2, dans lequel les hauteurs des saillies (152) sont fixées égales ou inférieures à 0,07 mm.

4. Roulement étanche selon la revendication 3, dans lequel un rayon des saillies (152) est fixé égal ou supérieur à 0,15 mm et inférieur à 2,0 mm, et
dans lequel les largeurs circonférentielles des saillies (152) sont fixées égales ou supérieures à 0,2 mm et égales ou inférieures à 1,0 mm.

5. Roulement étanche selon la revendication 1, dans lequel la lèvre d'étanchéité (331, 341) comprend une lèvre d'étanchéité axiale.

6. Roulement étanche selon la revendication 5, dans lequel l'élément formant joint étanche (330, 340) comprend une lèvre extérieure (332, 342) définissant un passage labyrinthe (350) entre la lèvre extérieure (332, 342) et une partie du roulement étanche située à l'extérieur de la surface de glissement de joint (312, 313).

7. Roulement étanche selon la revendication 1, dans lequel la lèvre d'étanchéité (441, 451) comprend une lèvre d'étanchéité radiale.

8. Roulement étanche selon la revendication 1, dans lequel la lèvre d'étanchéité (334, 344) comprend une lèvre d'étanchéité axiale.

9. Roulement étanche selon la revendication 1, dans lequel l'au moins une première saillie (334, 442) et l'au moins une seconde saillie (344, 452) s'étendent chacune dans la direction orthogonale à la direction circonférentielle, et ont chacune une forme arrondie qui est arrondie de sorte que la saillie approche graduellement de la première ou de la seconde surface de glissement de joint (312, 414, 313, 415) correspondante depuis deux extrémités circonférentielles de la saillie vers un centre circonférentiel de la saillie.

10. Roulement étanche selon l'une quelconque des revendications 1 à 9,
dans lequel la pluralité de saillies (152) est agencée à intervalles égaux sur une circonférence entière de la lèvre d'étanchéité, et
dans lequel l'au moins une première saillie (334, 442) comprend une pluralité de premières saillies agencées à intervalles égaux sur une circonférence entière de la lèvre d'étanchéité, et l'au moins une seconde saillie (344, 452) comprend une pluralité de secondes saillies agencées s à intervalles égaux sur une circonférence entière de la lèvre d'étanchéité.

11. Roulement étanche selon l'une quelconque des revendications 1 à 10, dans lequel l'élément formant joint étanche selon la revendication 1 ou 6 ou chacun des premier et second éléments formant joint selon la revendication 1 comprend une âme métallique (155, 206, 333, 343) ; et
une partie en caoutchouc vulcanisé (156) fixée sur au moins une partie radialement intérieure de l'âme métallique (155, 206, 333, 343), et
dans lequel la lèvre d'étanchéité (151, 202, 331, 341, 441, 451) est une portion de la partie en caoutchouc vulcanisé (156) de l'élément formant joint étanche ou une portion de l'une des parties en caoutchouc vulcanisé (156) des premier et second éléments formant joint.

12. Roulement étanche selon l'une quelconque des revendications 1 à 11, supportant au moins un élément rotatif (S1, S2) d'une transmission d'un véhicule ou d'un différentiel d'un véhicule.
